# EUROPEAN PATENT APPLICATION

(11) **EP 3 951 465 A1**
(43) Date of publication of application: **09.02.2022**
(21) Application number: 20810615.3
(22) Date of filing: 09.05.2020
(51) Int. Cl.: G02B 7/02, G03B 5/02

(54) **ELASTIC SHEET DESIGN METHOD AND ELASTIC SHEET, SMA ASSEMBLY, LENS MODULE, AND ELECTRONIC DEVICE**

(30) Priority: 22.05.2019 CN 201910428015
(71) Applicant: Huawei Technologies Co., Ltd., Longgang District Shenzhen, Guangdong 518129 (CN)
(72) Inventor: DUAN, Ran, Shenzhen, Guangdong 518129 (CN); WAN, Haibo, Shenzhen, Guangdong 518129 (CN); MEI, Qian, Shenzhen, Guangdong 518129 (CN); LV, Dalin, Shenzhen, Guangdong 518129 (CN); LI, Dengfeng, Shenzhen, Guangdong 518129 (CN)
(74) Representative: Maiwald Patent- und Rechtsanwaltsgesellschaft mbH
(86) International application number: PCT/CN2020/089295
(87) International publication number: WO 2020/233418

(57) **Abstract**

This application provides an elastomer designing method, an elastomer, an SMA assembly, a lens module, and an electronic device. The SMA assembly includes: a fastener, an elastomer, and shape memory alloy SMA lines. One end of the SMA line is connected to the fastener, and the other end is connected to the elastomer. The elastomer includes an elastomer body and at least one elastomer cantilever. The elastomer cantilever is connected to the elastomer body and extends along an outer edge of the elastomer body, the elastomer cantilever is connected to the fastener at a predetermined position of an extending part, and the at least one elastomer cantilever is axisymmetric or 90° rotationally symmetric. According to the foregoing technical solution, mechanical crosstalk of the elastomer in the SMA assembly can be reduced or eliminated, to improve optical image stabilization performance.

## Description

### TECHNICAL FIELD

This application relates to the field of lens drive apparatuses, and more specifically, to an elastomer designing method, an elastomer, an SMA assembly, a lens module, and an electronic device.

### BACKGROUND

Optical image stabilization (optical image stabilization, OIS) is to perform jitter detection by using a gyroscope, and then translate or rotate an entire lens in an opposite direction by using an OIS motor, to compensate for image blurring caused by shake of a terminal device during exposure.

Currently, commonly used OIS drive apparatuses include voice coil motor (voice coil motor, VCM) type, shape memory alloy (shape memory alloys, SMA) type, piezoelectric type, stepped motor type, and other OIS drive apparatuses. The SMA type OIS apparatus drives a lens by using an SMA technology, to implement optical image stabilization, and has many advantages such as a small drive size, high efficiency, a high speed, low power consumption, and low sound.

The SMA type drive apparatus generally drives a lens to move in two directions that are perpendicular to each other, to track shake of the electronic device. However, it is found in actual application that, when optical image stabilization is performed only in one direction, the lens shakes in the other direction, and a mechanical crosstalk effect is generated.

### SUMMARY

This application provides an elastomer designing method, an elastomer, an SMA assembly, a lens module, and an electronic device, to reduce or eliminate mechanical crosstalk of the elastomer in the SMA assembly, thereby improving optical image stabilization performance.

According to a first aspect, a shape memory alloy SMA assembly is provided, including: a fastener, an elastomer, and shape memory alloy SMA lines. One end of the SMA line is connected to the fastener, and the other end is connected to the elastomer. The elastomer includes an elastomer body and at least one elastomer cantilever. The elastomer cantilever is connected to the elastomer body and extends along an outer edge of the elastomer body, the elastomer cantilever is connected to the fastener at a predetermined position of an extending part, and the at least one elastomer cantilever is axisymmetric or 90° rotationally symmetric.

In the SMA assembly provided in this embodiment of this application, the elastomer cantilever included in the elastomer is axisymmetric or 90° rotationally symmetric. In this way, the elastomer has two directions that are perpendicular to each other, and K values of the elastomer in the two directions are approximately the same. When an acting force in any direction is applied to the elastomer, a movement direction of the elastomer is approximately the same as a direction of the acting force. In this way, when the acting force in any direction is applied to the elastomer, there is no mechanical crosstalk or there is only weak mechanical crosstalk, so that optical image stabilization performance can be improved.

It should be understood that, in this embodiment of this application, the movement direction of the elastomer may be considered a movement direction of a lens.

It should be further understood that, in this embodiment of this application, that the at least one elastomer cantilever is axisymmetric may be understood as that any elastomer cantilever in the at least one elastomer cantilever can overlap another elastomer cantilever after being flipped along a symmetry axis. Alternatively, if the at least one elastomer cantilever is considered a whole, the at least one elastomer cantilever is an axisymmetric figure. To be specific, the at least one elastomer cantilever can overlap itself after being flipped by 180° as a whole. In this embodiment of this application, when the elastomer is applied to the SMA assembly, the symmetry axis of the at least one elastomer cantilever is perpendicular to an optical axis, and intersects with the optical axis.

In this embodiment of this application, that the at least one elastomer cantilever is 90° rotationally symmetric may be understood as that any elastomer cantilever in the at least one elastomer cantilever can overlap another elastomer cantilever after being rotated by 90°. Alternatively, if the at least one elastomer cantilever is considered a whole, the at least one elastomer cantilever is a 90° rotationally symmetric figure. To be specific, the at least one elastomer cantilever can overlap itself after being rotated by 90° as a whole. In this embodiment of this application, when the elastomer is applied to the SMA assembly, a rotating shaft of the at least one elastomer cantilever is an optical axis.

With reference to the first aspect, in a possible implementation, a difference between a K value of the elastomer in a first direction and a K value of the elastomer in a second direction is less than a preset threshold, the first direction is perpendicular to the second direction, and the K value is a ratio of a magnitude of an acting force applied to the elastomer to a magnitude of displacement of the elastomer in a direction of the acting force.

The first direction and the second direction of the elastomer are perpendicular to each other and the difference between the K values is very small. When an acting force in any direction is applied to the elastomer, a movement direction of the elastomer is approximately the same as the direction of the acting force. In this way, when the acting force in any direction is applied to the elastomer, there is no mechanical crosstalk or there is only weak mechanical crosstalk. It should be understood that, in this embodiment of this application, when the mechanical crosstalk of the elastomer is very small, it is considered that the mechanical crosstalk is very weak, and it may be considered that there is no mechanical crosstalk.

Optionally, when the difference between the K value of the elastomer in the first direction and the K value of the elastomer in the second direction is less than the preset threshold, correspondingly, an acting force is applied to the elastomer, and a value of an included angle between a movement direction of the elastomer and a direction of the acting force is less than a preset angle. It should be understood that, a vector direction is not considered herein.

Optionally, the preset angle is 5°.

Optionally, the K value of the elastomer in the first direction is equal to the K value of the elastomer in the second direction.

The first direction and the second direction of the elastomer are perpendicular to each other and the K values are equal. When an acting force in any direction is applied to the elastomer, a movement direction of the elastomer is consistent with the direction of the acting force. In this way, when the acting force in any direction is applied to the elastomer, there is no mechanical crosstalk.

With reference to the first aspect, in a possible implementation, when the at least one elastomer cantilever is axisymmetric, the first direction and the second direction are symmetric with respect to a symmetry axis of the at least one elastomer cantilever.

With reference to the first aspect, in a possible implementation, the elastomer further includes movable grippers connected to the elastomer body. The movable grippers are centrosymmetric. The fastener includes centrosymmetric fixed grippers. The fixed grippers and the movable grippers are distributed in a staggered manner. One end of the SMA line is connected to the movable gripper, and the other end is connected to the fixed gripper.

One end of the SMA line is connected to the movable gripper, and one end is connected to the fixed gripper. When a current is fed into the SMA line, a length of the SMA line changes, to drive one end of the movable gripper to move.

It should be understood that, the movable gripper and the fixed gripper in this embodiment of this application are relative descriptions. To be specific, the gripper disposed on the fastener is relatively fixed, and therefore is referred to as the fixed gripper, and the gripper disposed on the elastomer is movable relative to the fastener, and therefore is referred to as the movable gripper. The movable gripper and the fixed gripper may alternatively be replaced with descriptions in other forms. For example, the "movable gripper" is replaced with a "first gripper", and the first gripper is movable relative to the fastener. Specifically, the first gripper is movable under an action of a pull force of the SMA line. For example, the "fixed gripper" is replaced with a "second gripper", and the second gripper is fixed relative to the fastener.

It should be further understood that, in this embodiment of this application, there may be a plurality of movable grippers. That the plurality of grippers are centrosymmetric may be understood as that any gripper in the plurality of grippers can overlap another gripper after being rotated by 180°. Alternatively, if the plurality of grippers are considered a whole, the plurality of grippers are a centrosymmetric figure. To be specific, the plurality of grippers can overlap themselves after being rotated by 180° as a whole.

With reference to the first aspect, in a possible implementation, a through hole is provided at a center of the elastomer body.

The through hole provided at the center of the elastomer body is used for connecting to a lens assembly, for driving a lens to move.

With reference to the first aspect, in a possible implementation, when the at least one elastomer cantilever is axisymmetric, the at least one elastomer cantilever includes one elastomer cantilever, and the elastomer cantilever is in a shape of a closed ring. A line connecting positions at which the elastomer cantilever is connected to the elastomer body is a symmetry axis of the elastomer cantilever, and/or the positions at which the elastomer cantilever is connected to the elastomer body are symmetric with respect to the symmetry axis of the elastomer cantilever.

With reference to the first aspect, in a possible implementation, when the at least one elastomer cantilever is axisymmetric, the at least one elastomer cantilever includes one elastomer cantilever, and the elastomer cantilever is in a shape of a closed ring. A line connecting positions at which the elastomer cantilever is connected to the fastener is a symmetry axis of the elastomer cantilever, and/or the positions at which the elastomer cantilever is connected to the fastener are symmetric with respect to the symmetry axis of the elastomer cantilever.

With reference to the first aspect, in a possible implementation, the at least one elastomer cantilever includes two elastomer cantilevers, two ends of each of the two elastomer cantilevers are connected to the elastomer body, and a middle position of each of the two elastomer cantilevers is connected to the fastener.

With reference to the first aspect, in a possible implementation, the at least one elastomer cantilever includes two elastomer cantilevers, a middle position of each of the two elastomer cantilevers is connected to the elastomer body, and two ends of each of the two elastomer cantilevers are connected to the fastener.

With reference to the first aspect, in a possible implementation, the at least one elastomer cantilever includes four elastomer cantilevers, one end of each of the four elastomer cantilevers is connected to the elastomer body, and the other end is connected to the fastener.

With reference to the first aspect, in a possible implementation, when the at least one elastomer cantilever is 90° rotationally symmetric, the at least one elastomer cantilever includes four elastomer cantilevers, one end of each of the four elastomer cantilevers is connected to the elastomer body, and the other end is connected to the fastener.

Optionally, when the at least one elastomer cantilever is axisymmetric, a quantity of the at least one elastomer cantilever is M, and M is 1 or an integer multiple of 2.

Optionally, when the at least one elastomer cantilever is 90° rotationally symmetric, a quantity of the at least one elastomer cantilever is M, and M is an integer multiple of 4.

With reference to the first aspect, in a possible implementation, the outer edge of the elastomer body is square or circular.

With reference to the first aspect, in a possible implementation, the at least one elastomer cantilever encloses a square or a circle around the outer edge of the elastomer body.

With reference to the first aspect, in a possible implementation, the elastomer cantilever and the elastomer body are integral, or the elastomer cantilever and the elastomer body are fixedly connected to each other.

With reference to the first aspect, in a possible implementation, the fastener is a metal plate and/or a printed circuit board.

According to a second aspect, an SMA assembly is provided, including: a fastener, an elastomer assembly, and SMA lines. One end of the SMA line is connected to the fastener, and the other end is connected to the elastomer assembly. The elastomer assembly includes an upper elastomer and a lower elastomer, and the lower elastomer is obtained after the upper elastomer is flipped or rotated by 90°. The upper elastomer includes an elastomer body and an elastomer cantilever. One end of the elastomer cantilever is connected to the elastomer body, and the other end is connected to the fastener.

The SMA assembly provided in this embodiment of this application includes the elastomer assembly. The elastomer assembly includes the upper elastomer and the lower elastomer, and the lower elastomer is obtained after the upper elastomer is flipped or rotated by 90°. In this way, for the entire elastomer assembly, the elastomer assembly has two directions that are perpendicular to each other, and K values of the elastomer assembly in the two directions are approximately the same. When an acting force in any direction is applied to the elastomer assembly, a movement direction of the elastomer assembly is approximately the same as the direction of the acting force. In this way, when the acting force in any direction is applied to the elastomer assembly, there is no mechanical crosstalk or there is only weak mechanical crosstalk, so that optical image stabilization performance can be improved. In this embodiment of this application, weak mechanical crosstalk caused by an included angle that is between the force and the movement direction of the elastomer and that has a value of 5° or less is considered no mechanical crosstalk.

It should be understood that, in this embodiment of this application, the movement direction of the elastomer assembly may be considered a movement direction of a lens.

It should be further understood that, in this embodiment of this application, the upper elastomer and the lower elastomer are relative descriptions. To be specific, the elastomer close to an object side is referred to as the upper elastomer, and the elastomer close to an image side is referred to as the lower elastomer. The upper elastomer and the lower elastomer may alternatively be replaced with descriptions in other forms. For example, the "upper elastomer" is replaced with a "first elastomer", and the first elastomer is located on the elastomer assembly and is close to the object side. The "lower elastomer" is replaced with a "second elastomer", and the second elastomer is located on the elastomer assembly and is close to the image side. The first elastomer and the second elastomer are disposed in an overlapping manner.

With reference to the second aspect, in a possible implementation, a K value of the elastomer assembly in a first direction is equal to a K value of the elastomer assembly in a second direction, and is equal to a sum of a K value of the upper elastomer in the first direction and a K value of the upper elastomer in the second direction, and the first direction is perpendicular to the second direction. The K value is a ratio of a magnitude of an acting force applied to the elastomer to a magnitude of displacement of the elastomer in a direction of the acting force.

With reference to the second aspect, in a possible implementation, the upper elastomer further includes movable grippers connected to the elastomer body. The movable grippers are centrosymmetric. The fastener includes centrosymmetric fixed grippers. The fixed grippers and the movable grippers are distributed in a staggered manner. One end of the SMA line is connected to the movable gripper, and the other end is connected to the fixed gripper.

With reference to the second aspect, in a possible implementation, a through hole is provided at a center of the elastomer body.

According to a third aspect, an elastomer is provided, including an elastomer body and at least one elastomer cantilever. The elastomer cantilever is connected to the elastomer body and extends along an outer edge of the elastomer body, and the at least one elastomer cantilever is axisymmetric or 90° rotationally symmetric.

Optionally, the elastomer is applied to an optical image stabilization motor. Specifically, the elastomer is applied to a shape memory alloy SMA motor.

In the elastomer provided in this embodiment of this application, the elastomer cantilever is axisymmetric or 90° rotationally symmetric. In this way, the elastomer has two directions that are perpendicular to each other, and K values of the elastomer in the two directions are approximately the same. When an acting force in any direction is applied to the elastomer, a movement direction of the elastomer is approximately the same as a direction of the acting force. In this way, when the acting force in any direction is applied to the elastomer, there is no mechanical crosstalk or there is only weak mechanical crosstalk. When the elastomer is applied to optical image stabilization, mechanical crosstalk can be reduced or eliminated, to improve optical image stabilization performance.

It should be understood that, in this embodiment of this application, that the at least one elastomer cantilever is 90° rotationally symmetric may be understood as that any elastomer cantilever in the at least one elastomer cantilever can overlap another elastomer cantilever after being rotated by 90°. Alternatively, if the at least one elastomer cantilever is considered a whole, the at least one elastomer cantilever is a 90° rotationally symmetric figure. To be specific, the at least one elastomer cantilever can overlap itself after being rotated by 90° as a whole.

With reference to the third aspect, in a possible implementation, a difference between a K value of the elastomer in a first direction and a K value of the elastomer in a second direction is less than a preset threshold, the first direction is perpendicular to the second direction, and the K value is a ratio of a magnitude of an acting force applied to the elastomer to a magnitude of displacement of the elastomer in a direction of the acting force.

The first direction and the second direction of the elastomer are perpendicular to each other and the difference between the K values is very small. When an acting force in any direction is applied to the elastomer, a movement direction of the elastomer is approximately the same as the direction of the acting force. In this way, when the acting force in any direction is applied to the elastomer, there is no mechanical crosstalk or there is only weak mechanical crosstalk. It should be understood that, in this embodiment of this application, when the mechanical crosstalk of the elastomer is very small, it is considered that the mechanical crosstalk is very weak, and it may be considered that there is no mechanical crosstalk.

Optionally, when the difference between the K value of the elastomer in the first direction and the K value of the elastomer in the second direction is less than the preset threshold, correspondingly, an acting force is applied to the elastomer, and a value of an included angle between a movement direction of the elastomer and a direction of the acting force is less than a preset angle. It should be understood that, a vector direction is not considered herein.

Optionally, the preset angle is 5°.

Optionally, the K value of the elastomer in the first direction is equal to the K value of the elastomer in the second direction.

The first direction and the second direction of the elastomer are perpendicular to each other and the K values are equal. When an acting force in any direction is applied to the elastomer, a movement direction of the elastomer is consistent with the direction of the acting force. In this way, when the acting force in any direction is applied to the elastomer, there is no mechanical crosstalk.

With reference to the third aspect, in a possible implementation, when the at least one elastomer cantilever is axisymmetric, the first direction and the second direction are symmetric with respect to a symmetry axis of the at least one elastomer cantilever.

In other words, a symmetry axis of the first direction and the second direction is the symmetry axis of the at least one elastomer cantilever.

With reference to the third aspect, in a possible implementation, the elastomer further includes grippers connected to the elastomer body, and the grippers are centrosymmetric.

Optionally, the gripper may be a folding stamping structure or an interference hole structure.

With reference to the third aspect, in a possible implementation, a through hole is provided at a center of the elastomer body.

With reference to the third aspect, in a possible implementation, when the at least one elastomer cantilever is axisymmetric, the at least one elastomer cantilever includes one elastomer cantilever, and the elastomer cantilever is in a shape of a closed ring. A line connecting positions at which the elastomer cantilever is connected to the elastomer body is a symmetry axis of the elastomer cantilever, and/or the positions at which the elastomer cantilever is connected to the elastomer body are symmetric with respect to the symmetry axis of the elastomer cantilever.

In other words, when the elastomer includes one elastomer cantilever, the elastomer cantilever is in the shape of a closed ring around the elastomer body. Because the elastomer cantilever is axisymmetric, the positions at which the elastomer cantilever is connected to the elastomer body are symmetric with respect to the symmetry axis of the elastomer cantilever, or are located on the symmetry axis of the elastomer cantilever.

With reference to the third aspect, in a possible implementation, the at least one elastomer cantilever includes two elastomer cantilevers, and two ends of each of the two elastomer cantilevers are connected to the elastomer body.

In other words, when the elastomer includes two elastomer cantilevers, the two elastomer cantilevers are axisymmetric, the two ends of each of the two elastomer cantilevers may be connected to the elastomer body, and a cantilever part between the two ends of the elastomer cantilever extends around the elastomer body.

With reference to the third aspect, in a possible implementation, the at least one elastomer cantilever includes two elastomer cantilevers, a middle position of each of the two elastomer cantilevers is connected to the elastomer body, and two ends of each of the at least two elastomer cantilevers are free ends.

In other words, when the elastomer includes two elastomer cantilevers, the two elastomer cantilevers are axisymmetric, the two ends of each of the two elastomer cantilevers may be free ends, and a cantilever part between the two ends of the elastomer cantilever is connected to the elastomer body.

With reference to the third aspect, in a possible implementation, the at least one elastomer cantilever includes four elastomer cantilevers, one end of each of the four elastomer cantilevers is connected to the elastomer body, and the other end is a free end.

In other words, when the elastomer includes four elastomer cantilevers, the four elastomer cantilevers are axisymmetric, one end of each elastomer cantilever is connected to the elastomer body, and the other end is a free end.

In other words, when the elastomer is applied to an SMA assembly, the free end of each of the elastomer cantilevers is configured to connect to the fastener in the first aspect.

With reference to the third aspect, in a possible implementation, when the at least one elastomer cantilever is 90° rotationally symmetric, the at least one elastomer cantilever includes four elastomer cantilevers, one end of each of the four elastomer cantilevers is connected to the elastomer body, and the other end is a free end.

In other words, when the elastomer includes four elastomer cantilevers, the four elastomer cantilevers are 90° rotationally symmetric.

Optionally, when the at least one elastomer cantilever is axisymmetric, a quantity of the at least one elastomer cantilever is M, and M is 1 or an integer multiple of 2.

Optionally, when the at least one elastomer cantilever is 90° rotationally symmetric, a quantity of the at least one elastomer cantilever is M, and M is an integer multiple of 4.

With reference to the third aspect, in a possible implementation, the outer edge of the elastomer body is square or circular.

The outer edge of the elastomer body may be designed into a suitable shape based on an actual requirement.

With reference to the third aspect, in a possible implementation, the at least one elastomer cantilever encloses a square or a circle around the outer edge of the elastomer body.

With reference to the third aspect, in a possible implementation, the elastomer cantilever and the elastomer body are integral, or the elastomer cantilever and the elastomer body are fixedly connected to each other.

According to a fourth aspect, a lens module is provided, including a lens assembly and the SMA assembly in the first aspect or any possible implementation of the first aspect, where the lens assembly is connected to the SMA assembly.

Optionally, a through hole is provided at a center of the elastomer body included in the SMA assembly, and the lens assembly is disposed in the through hole.

According to a fifth aspect, a lens module is provided, including a lens assembly and the SMA assembly in the second aspect or any possible implementation of the second aspect, where the lens assembly is connected to the SMA assembly.

Optionally, a through hole is provided at a center of the elastomer body included in the SMA assembly, and the lens assembly is disposed in the through hole.

According to a sixth aspect, an electronic device is provided, including the SMA assembly in the first aspect or any possible implementation of the first aspect, or including the SMA assembly in the second aspect or any possible implementation of the second aspect.

According to a seventh aspect, an electronic device is provided, including the lens module in the fourth aspect or the fifth aspect.

According to an eighth aspect, an elastomer designing method is provided, including: determining a first direction and a second direction of a first elastomer that are perpendicular to each other, where the first direction and the second direction are directions in which there is no mechanical crosstalk; flipping the first elastomer along a symmetry axis of the first direction and the second direction, to obtain a second elastomer; and designing a third elastomer based on the first elastomer and the second elastomer, where a K value of the third elastomer in the first direction is equal to a K value of the third elastomer in the second direction, and is equal to a sum of a K value of the first elastomer in the first direction and a K value of the first elastomer in the second direction, and the K value is a ratio of a magnitude of an acting force applied to the elastomer to a magnitude of displacement of the elastomer in a direction of the acting force.

In the elastomer designing method provided in this embodiment of this application, an elastomer structure without mechanical crosstalk can be designed based on a basic elastomer or an existing elastomer, so that optical image stabilization performance can be greatly improved.

It should be understood that, in this embodiment of this application, a direction in which there is no mechanical crosstalk also includes a case in which mechanical crosstalk is very small (for example, mechanical crosstalk caused by an included angle that is between the force and the movement direction of the elastomer and that has a value of 5° or less). Because the mechanical crosstalk is very weak, the mechanical crosstalk may be ignored.

With reference to the eighth aspect, in a possible implementation, the first elastomer includes a first elastomer body and at least one first elastomer cantilever. Each of the at least one first elastomer cantilever extends along an outer edge of the first elastomer body. One end of each first elastomer cantilever is connected to the first elastomer body, and the other end is a free end. The third elastomer includes a second elastomer body and at least one second elastomer cantilever. Each of the at least one second elastomer cantilever is connected to the second elastomer body and extends along an outer edge of the second elastomer body, and the at least one second elastomer cantilever is axisymmetric.

With reference to the eighth aspect, in a possible implementation, the determining a first direction and a second direction of a first elastomer that are perpendicular to each other includes: fixing the free end of the first elastomer cantilever, and applying acting forces in different directions to the first elastomer; determining displacement directions of the first elastomer body under the acting forces in different directions; and when the displacement directions of the first elastomer body are the same as the directions of the acting forces applied to the first elastomer, determining that the directions of the acting forces are the first direction and the second direction.

Optionally, the first direction and the second direction of the first elastomer that are perpendicular to each other may be determined based on a model simulation method or an experimental method.

According to a ninth aspect, an elastomer designing method is provided, including: rotating a first elastomer by 90° to obtain a second elastomer; designing a third elastomer based on the first elastomer and the second elastomer, where a K value of the third elastomer in a first direction is equal to a K value of the third elastomer in a second direction, and is equal to a sum of a K value of the first elastomer in the first direction and a K value of the first elastomer in the second direction, the first direction is perpendicular to the second direction, and the K value is a ratio of a magnitude of an acting force applied to the elastomer to a magnitude of displacement of the elastomer in a direction of the acting force.

In the elastomer designing method provided in this embodiment of this application, an elastomer structure without mechanical crosstalk can be designed based on a basic elastomer or an existing elastomer, so that optical image stabilization performance can be greatly improved.

With reference to the ninth aspect, in a possible implementation, the first elastomer includes a first elastomer body and at least one first elastomer cantilever. Each of the at least one first elastomer cantilever extends along an outer edge of the first elastomer body. One end of each first elastomer cantilever is connected to the first elastomer body, and the other end is a free end. The third elastomer includes a second elastomer body and at least one second elastomer cantilever. Each of the at least one second elastomer cantilever is connected to the second elastomer body and extends along an outer edge of the second elastomer body, and the at least one second elastomer cantilever is 90° rotationally symmetric.

### BRIEF DESCRIPTION OF DRAWINGS

FIG. 1(a) and FIG. 1(b) are schematic diagrams of an electronic device according to an embodiment of this application;
FIG. 2 is a schematic exploded view of a lens module according to an embodiment of this application;
FIG. 3 is a schematic cross-sectional view of the lens module in FIG. 2;
FIG. 4 is a schematic exploded view of an SMA assembly according to an embodiment of this application;
FIG. 5 is a simplified schematic diagram of the SMA assembly in FIG. 4;
FIG. 6(a) and FIG. 6(b) are schematic diagrams of a simulation result of the SMA assembly in FIG. 5;
FIG. 7 is a schematic diagram of an elastomer simulation model according to an embodiment of this application;
FIG. 8 is a schematic diagram of a simulation result of the elastomer simulation model in FIG. 7;
FIG. 9 is a schematic diagram of a simulation result of the elastomer simulation model in FIG. 7;
FIG. 10(a), FIG. 10(b), FIG. 10(c), and FIG. 10(d) are schematic structural diagrams of elastomers according to an embodiment of this application;
FIG. 11(a), FIG. 11(b), FIG. 11(c), FIG. 11(d), FIG. 11(e), and FIG. 11(f) are schematic structural diagrams of elastomers according to an embodiment of this application;
FIG. 12 is a schematic flowchart of an elastomer designing method according to an embodiment of this application;
FIG. 13(a), FIG. 13(b), FIG. 13(c), and FIG. 13(d) are schematic structural diagrams of elastomers according to an embodiment of this application;
FIG. 14 is a schematic flowchart of an elastomer designing method according to an embodiment of this application;
FIG. 15(a) and FIG. 15(b) are schematic structural diagrams of elastomers according to an embodiment of this application;
FIG. 16(a), FIG. 16(b), and FIG. 16(c) are schematic structural diagrams of an elastomer assembly according to an embodiment of this application; and
FIG. 17 is a schematic diagram of a simulation result of an elastomer structure according to an embodiment of this application.

### DESCRIPTION OF EMBODIMENTS

The following describes technical solutions of this application with reference to accompanying drawings. It is clear that the described embodiments are merely some but not all of the embodiments of this application.

An electronic device in the embodiments of this application may include a handheld device, a vehicle-mounted device, a wearable device, a computing device, or another processing device connected to a wireless modem. The electronic device may further include a cellular phone (cellular phone), a smartphone (smartphone), a personal digital assistant (personal digital assistant, PDA) computer, a tablet computer, a portable computer, a laptop computer (laptop computer), a machine type communication (machine type communication, MTC) terminal, a point of sales (point of sales, POS), a video camera, a video recorder, a camera, a smart watch (smart watch), a smart wristband (smart wristband), a vehicle-mounted computer, another electronic device with an imaging function, and the like.

The following terms "first", "second" and the like are merely intended for a purpose of description, and shall not be understood as an indication or implication of relative importance or implicit indication of the number of indicated technical features. Therefore, a feature limited by "first" or "second" may explicitly or implicitly include one or more features.

In addition, in this application, orientation terms such as "center", "up", "down", "inside", and "outside" are defined relative to orientations or positions of components schematically placed in the accompanying drawings. It should be understood that these directional terms are relative concepts, and are intended to provide relative description and clarification, rather than indicate or imply that an indicated apparatus or element needs to have a specific orientation or needs to be constructed and operated in the specific orientation. The orientation terms may vary correspondingly with the orientations in which the components are placed in the accompanying drawings, and therefore cannot be understood as a limitation on this application.

It should be further noted that, in the embodiments of this application, a same reference numeral represents a same component or a same part. For the same part in the embodiments of this application, a reference numeral may be marked in a figure by using only one part or component as an example. It should be understood that, the reference numeral is also applicable to another same part or component.

For ease of understanding, the following first explains and describes technical terms used in the embodiments of this application.

An optical axis is a direction in which a ray is transmitted in an optical system. Refer to a chief ray in a central field of view. A symmetric transmission system generally overlaps a rotating centerline of the optical system.

A focus is a point at which rays parallel to the optical axis converge after the rays are refracted by a lens.

Auto focus (auto focus, AF) is a process in which light reflected by a photographed object after the light passes through a lens is imaged and received on an image sensor by using a light reflection principle of the photographed object, and then drives an electric focusing apparatus to focus after being processed by a computer.

Optical image stabilization (optical image stabilization, OIS) means that in an imaging instrument, for example, a mobile phone or a camera, instrument shake phenomena occurring in a process of capturing an optical signal are avoided or reduced by disposing an optical component, to improve imaging quality. A common practice is to perform jitter detection by using a gyroscope, and then translate or rotate an entire lens in an opposite direction by using an OIS motor, to compensate for image blurring caused by shake of the imaging instrument during exposure.

A shape memory effect (shape memory effect, SME) is an effect that a specific alloy is processed into a particular shape at a high temperature, then is subject to limited plastic deformation after being cooled to a low-temperature martensite phase change state, and is then restored to a shape before the low-temperature deformation when being heated to a high-temperature parent phase state.

A shape memory alloy (shape memory alloys, SMA) is an alloy with a shape memory effect. There are two phases in the shape memory alloy: a high-temperature phase: austenite phase, and a low-temperature phase: martensite phase. The shape memory alloy has a deformation restoration capability because a thermoelastic martensite phase change occurs inside a material during deformation. Based on different thermodynamic loading conditions, the shape memory alloy exhibits two types of performance: the shape memory effect and pseudoelasticity. Shape memory alloy materials include a nickel-titanium base shape memory alloy, a copper based shape memory alloy, an iron base shape memory alloy, and the like.

Pseudoelasticity (pseudoelasticity), also referred to as superelasticity (superelasticity), shows that under an action of an external force, the shape memory alloy has a deformation restoration capability much stronger than that of common metal, that is, a large strain generated in a loading process is restored with unloading.

Centrosymmetry: If a figure can overlap another figure after being rotated around a particular point by 180°, it is said that the two figures are centrosymmetric with respect to this point, and this point is referred to as a symmetry center. A line connecting symmetric points runs through the symmetry center, and is divided equally by the symmetry center.

Centrosymmetric figure: A figure is rotated around a particular point by 180°, and if the figure obtained after rotation can overlap the original figure, the figure is referred to as a centrosymmetric figure, and this point is a symmetry center of the figure.

Axis symmetry: If a figure can overlap another figure after being flipped along a particular straight line, the two figures are axisymmetric with respect to this line, and this line is referred to as a symmetry axis. A line connecting symmetric points is vertically divided equally by the symmetry axis.

Axisymmetric figure: After a figure is folded along a particular straight line, if parts on two sides of the straight line can overlap each other, the figure is referred to as an axisymmetric figure, and the straight line is referred to as a symmetry axis of the figure.

Rotational symmetry: In a plane, if a figure can overlap another figure after being rotated around a particular fixed point by a particular angle (less than a round angle), the two figures are rotationally symmetric.

Rotationally symmetric figure: In a plane, if a figure can overlap itself after being rotated around a particular fixed point by a particular angle (less than a round angle), this figure is referred to as a rotationally symmetric figure. A rotation center is at a direct center of the figure. A minimum value of a rotation angle is 360° divided by a quantity of basic patterns.

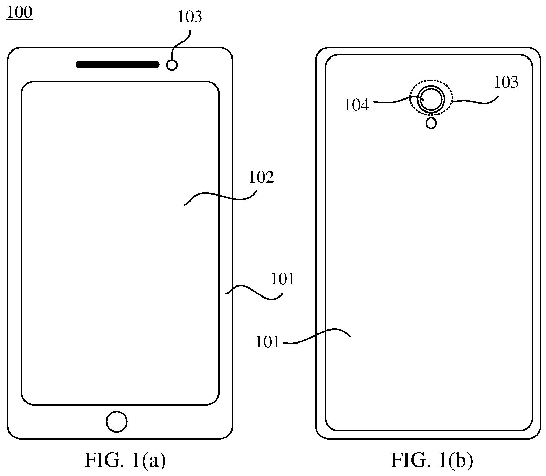

FIG. 1(a) and FIG. 1(b) are schematic diagrams of an electronic device according to an embodiment of this application. The electronic device 100 may be a device having a video shooting or photographing function. A specific form of the electronic device 100 is not specifically limited in this embodiment of this application. For ease of description and understanding, the following provides description by using an example in which the electronic device 100 is a mobile phone. For example, FIG. 1(a) and FIG. 1(b) respectively schematically show a front surface and a back surface of the electronic device 100.

As shown in FIG. 1(a) and FIG. 1(b), the electronic device 100 may include a housing 101, a display (display panel, DP) 102, and a lens module (camera compact module, CCM) 103.

Accommodating space is formed in the housing 101 for arranging various parts of the electronic device 100. The housing 101 may further serve to protect the electronic device 100 and support the entire electronic device 100. The display 102 and the lens module 103 are disposed in the accommodating space of the housing 101, and are connected to the housing 101. In some embodiments, the housing 101 includes a rear cover and a middle frame, and the display 102 and the lens module 103 may be fixed on the middle frame. A material of the housing 101 may be metal, plastic, ceramic, or glass.

The display 102 may be a liquid crystal display (liquid crystal display, LCD), an organic light emitting diode (organic light emitting diode, OLED) display, or the like, where the OLED display may be a flexible display or a hard display. The display 102 may be a common regular screen, or may be a special-shaped screen, a foldable screen, or the like. For example, the display 102 may be relatively freely rotated or folded to form an arc, a sphere, or a cylinder. The display 102 may be disposed on the front surface and/or the back surface of the electronic device 100. The front surface of the electronic device 100 may be understood as a side facing a user when the user uses the electronic device 100, and the back surface of the electronic device 100 may be understood as a side opposite to the user when the user uses the electronic device 100.

The lens module 103 is configured to capture a still image or a video. When disposed on the front surface of the electronic device 100, the lens module 103 may be configured to photograph a scene on the side of the front surface of the electronic device 100. In some embodiments, the lens module 103 may be referred to as a front-facing camera. When disposed on the back surface of the electronic device 100, the lens module 103 may be configured to photograph a scene on the side of the back surface of the electronic device 100. In some embodiments, the lens module 103 may be referred to as a rear-facing camera. During photographing, the user may select a corresponding lens module based on a photographing requirement. The lens module 103 may be configured to photograph scenes at different distances. For example, the lens module 103 is configured to perform long-distance photography, short-distance photography, or macrophotography. This is not specifically limited in this embodiment of this application.

It should be understood that a mounting position of the lens module 103 in FIG. 1(a) and FIG. 1(b) is merely an example. When the lens module 103 is used as the front-facing camera, the lens module 103 may be mounted at any position on the front surface of the electronic device 100 except the display 102, for example, a left side of a telephone receiver, an upper middle part of the electronic device 100, a lower part (or referred to as a chin) of the electronic device 100, or four corners of the electronic device 100. When the lens module 103 is used as the rear-facing camera, the lens module 103 may be mounted at any position on the back surface of the electronic device 100, for example, an upper left corner or an upper right corner. In some other embodiments, the lens module 103 may alternatively not be disposed on a main body of the electronic device 100, but disposed on an edge protruding from the main body of the electronic device 100, or disposed on a component that is movable or rotatable relative to the electronic device 100. The component is telescopic, rotatable, or the like from the main body of the electronic device 100. When the lens module 103 is rotatable relative to the electronic device 100, the lens module 103 is equivalent to the front-facing camera and the rear-facing camera. To be specific, both a scene on the side of the front surface of the electronic device 100 and a scene on the side of the back surface of the electronic device 100 can be photographed by rotating the same lens module 103. In some other embodiments, when the display 101 is foldable, the lens module 103 may be used as the front-facing camera or the rear-facing camera with folding of the display 102.

A quantity of disposed lens modules 103 is not limited in this embodiment of this application, and may be one, two, four, or even more. For example, one or more lens modules 103 may be disposed on the front surface of the electronic device 100, and/or one or more lens modules 103 may be disposed on the back surface of the electronic device 100. When a plurality of lens modules 103 are disposed, the plurality of lens modules 103 may be the same or may be different. For example, lens optical parameters of the plurality of lens modules 103 are different, lens positions are different, and lens shapes are different. In this embodiment of this application, relative positions of the plurality of lens modules when the plurality of lens modules are disposed are not limited.

Optionally, the electronic device 100 may further include a protection lens 104 configured to protect the lens module 103. The protection lens 104 is disposed on the housing 101 and covers the lens module 103. When the protection lens 104 is configured to protect the front-facing camera, the protection lens 104 may cover only the front-facing lens module or the entire front surface of the electronic device 100. When the protection lens 104 covers the entire front surface of the electronic device 100, the protection lens 104 may be configured to protect both the front-facing lens module and the display 102, and the protection lens 104 is cover glass (cover glass, CG). When the protection lens 104 is configured to protect the rear-facing camera, the protection lens 104 may cover the entire back surface of the electronic device 100, or may be disposed only at a position corresponding to the rear-facing lens module. A material of the protection lens 104 may be glass, sapphire, ceramic, or the like. This is not specifically limited in this embodiment of this application. In some embodiments, the protection lens 104 is transparent, and a ray outside the electronic device 100 can enter the lens module 103 through the protection lens 104.

It should be understood that the structure shown in FIG. 1(a) and FIG. 1(b) does not constitute a specific limitation on the electronic device 100, and the electronic device 100 may include more or fewer components than those shown in the figure. For example, the electronic device 100 may further include one or more of components such as a battery, a flashlight, a fingerprint recognition module, a telephone receiver, a key, and a sensor. Alternatively, the electronic device 100 may have a component arrangement manner different from that shown in the figure.

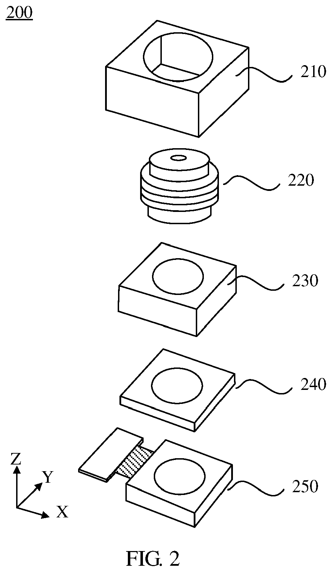

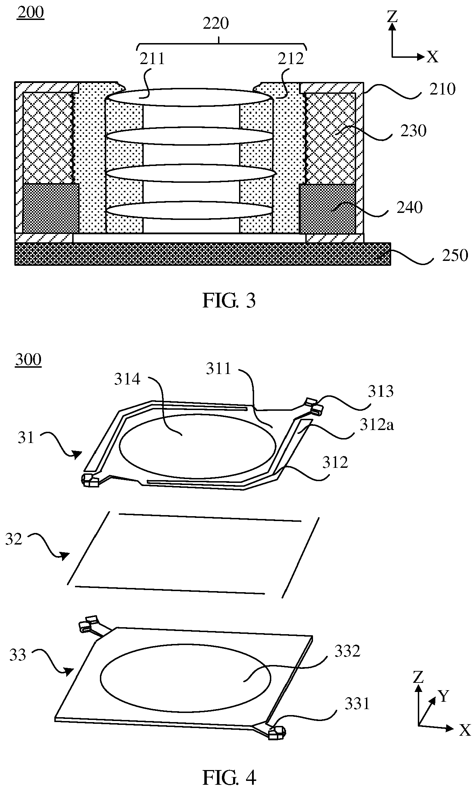

FIG. 2 is a schematic exploded view of a lens module according to an embodiment of this application. FIG. 3 is a schematic cross-sectional view of the lens module in FIG. 2. The lens module 200 may be an example structure of the lens module 103 in FIG. 1. The following briefly describes the structure of the lens module 200 with reference to FIG. 2 and FIG. 3.

For ease of description, the following defines an optical axis direction of the lens module 200 as a Z direction, a direction side of a photographed object in the optical axis direction as a front side, and a direction side opposite to the photographed object as a rear side. A first direction perpendicular to the optical axis is an X direction, and a second direction perpendicular to the optical axis and the first direction is a Y direction. A direction close to the optical axis in the X and Y directions is an inner side, and a direction opposite to the optical axis is an outer side. Similarly, definitions of the X, Y, and Z directions and the front, rear, inner, and outer sides are also applicable to the accompanying drawings to be described later. It should be noted that, the foregoing definitions of the X, Y, and Z directions, and the front, rear, inner, and outer sides are merely intended to help describe position relationships and connection relationships between parts in this embodiment of this application, and should not be understood as a limitation on this embodiment of this application.

As shown in the figure, the lens module 200 may include a shell 210, a lens assembly 220, an auto focus (auto focus, AF) assembly 230, an optical image stabilization (optical image stabilization, OIS) assembly 240, and an image sensor assembly 250.

The lens assembly 220 mainly includes an optical lens 211 and a lens barrel 212, and the lens assembly 220 is configured to image a scene on an object side onto an imaging surface on an image side. The optical lens 211 may include at least one lens, and the at least one lens may be different or the same. The at least one lens may include a solid lens and/or a liquid lens. The solid lens may be an optical element whose surface is a part of a spherical surface and that is made of a transparent substance, such as plastic (plastic) or glass (glass), and has fixed lens parameters. The liquid lens is a mechanical connection free optical element made of one or more liquids. Lens parameters of the liquid lens may be dynamically adjusted through external control. In this embodiment of this application, a quantity of lenses included in the optical lens 211 is not specifically limited. A person skilled in the art may correspondingly set a quantity of lenses based on an actual requirement, for example, one, two, three, five, eight, or more. Alternatively, a combination manner of the solid lens and/or the liquid lens may be set based on an actual requirement, and no further description is provided herein.

A focal length of the optical lens 211 may be fixed, and in this case, the lens assembly 220 is a prime lens. The focal length of the optical lens 211 may alternatively be adjusted, and in this case, the lens assembly 220 is a zoom lens. For example, adjustment of the focal length of the optical lens 211 may be implemented by adjusting relative positions between the lenses of the optical lens 211, adjusting a refractive index of the liquid lens, changing a surface shape (curvature) of the liquid lens, or the like.

Accommodating space is formed in the lens barrel 212, and is mainly used for accommodating the optical lens 211. The lens barrel 212 may be a whole, and the optical lens 211 is accommodated in the integral lens barrel 212, but the relative positions between the lenses of the optical lens 211 may be adjusted by using another structure. The lens barrel 212 may alternatively include a plurality of lens barrel parts, and the lenses of the optical lens 211 are disposed in groups in the plurality of lens barrel parts. Relative positions between the plurality of lens barrel parts may be adjusted, to implement adjustment of the relative positions between the lenses. Therefore, it should be understood that the structure of the lens barrel 212, a manner of connection between the optical lens 211 and the lens barrel 212, and the like in FIG. 2 and FIG. 3 are merely examples, and this embodiment of this application is not limited thereto.

The AF assembly 230 is configured to implement auto focus. As shown in FIG. 3, the AF assembly 230 is connected to the lens barrel 212 in the lens assembly 220. In an auto focus process, the AF assembly 230 may push the lens barrel 212 to move up and down along the optical axis, to change a distance from an optical center of the optical lens 211 to the imaging surface (that is, change an image distance), thereby obtaining a clear image. It should be understood that the figure shows only a position of the AF assembly 230 schematically, and a specific structure of the AF assembly 230 is not limited thereto.

The OIS assembly 240 is configured to implement optical image stabilization. As shown in FIG. 3, the OIS assembly 240 is connected to the lens barrel 212 in the lens assembly 220. In a process of optical image stabilization, the OIS assembly 240 may drive the lens barrel 212 to move along a direction perpendicular to the optical axis, so that a focus of the optical lens 211 deviates from the optical axis, thereby obtaining a clear image. It should be understood that the figure shows only a position of the SMA assembly 240 schematically, and a specific structure of the SMA assembly 240 is not limited thereto.

In this embodiment of this application, the AF assembly 230 may be referred to as an AF motor, and the OIS assembly may be referred to as an OIS motor. In some embodiments, the lens module 200 may include an AF motor and/or an OIS motor. To be specific, the lens module 200 may implement auto focus and/or optical image stabilization. In some embodiments, the AF motor and an SMA motor may alternatively be integrated in the lens module 200, and one motor implements both auto focus and optical image stabilization. This embodiment of this application is described only by using an example in which the lens module 200 includes two components: the AF motor and the OIS motor. However, it should be understood that this embodiment of this application is not limited thereto.

The sensor assembly 250 is disposed on a rear side of the lens assembly 210 and is mainly used for imaging. Specifically, the sensor assembly 250 may include a light filter (for example, an infrared cut-off filter or a light filter that filters out other optical bands), a sensor, a circuit board, and the like. The infrared cut-off filter can eliminate unnecessary rays projected on the sensor, and prevent problems such as a ghost, a flare, and color cast during imaging of the sensor. The sensor is a semiconductor chip including hundreds of thousands to millions of photodiodes on its surface. When illuminated by light, the sensor generates charges and converts the charges into digital signals by using an analog to digital converter chip. The sensor may be a charge coupled device (charge coupled device, CCD) or a complementary metal-oxide conductor device (complementary metal-oxide semiconductor, CMOS). The circuit board may be a flexible circuit board (flexible printed circuit, FPC) or a printed circuit board (printed circuit board, PCB), and is configured to transmit an electrical signal. The FPC may be a single-sided flexible board, a double-sided flexible board, a multi-layer flexible board, a rigid-flexible board, a flexible circuit board with a hybrid structure, or the like.

An inner cavity is formed in the shell 210 and is configured to accommodate the lens assembly 220, the AF assembly 230, the OIS assembly 240, and the like. In addition, the shell 210 may also perform a function of protection and supporting. A structure of the shell 210 in the figure is merely an example, and this embodiment of this application is not limited thereto. A person skilled in the art may correspondingly design a shape of the shell 210 based on an actual requirement.

The lens module 200 may further include components such as a connector and peripheral electronic components (not shown in the figure). Details are not described herein one by one.

With continuous development of electronic device technologies, a user has an increasingly high requirement on a photographing function of the electronic device, especially optical image stabilization. Currently, commonly used OIS drive apparatuses include voice coil motor (voice coil motor, VCM) type, shape memory alloy (shape memory alloy, SMA) type, VCM-SMA type, piezoelectric type, stepped motor type, and other OIS drive apparatuses. The SMA type OIS apparatus and the VCM-SMA type OIS apparatus drive a lens by using an SMA technology, to implement optical image stabilization. Therefore, compared with the VCM type OIS apparatus, the SMA type OIS apparatus and the VCM-SMA type OIS apparatus have many advantages such as a small drive size, high efficiency, a high speed, low power consumption, and low sound. Moreover, the OIS apparatus using the SMA technology has advantages such as a larger load-carrying capacity over the VCM type OIS apparatus and no generation of magnetic field interference, and therefore may be configured to drive a relatively heavy lens to implement optical image stabilization, and may further implement dual OIS functions when reference is relatively small in dual cameras. The technical solutions in the embodiments of this application are mainly applied to an OIS apparatus that implements optical image stabilization by using an SMA technology.

A main working principle of the OIS apparatus using the SMA technology is that a very fine metal wire (for example, with a diameter of 25 microns) is made by using a nickel-titanium alloy, and then a current is fed into the metal wire, so that the metal wire is heated by the micro current to deform quickly. A generated driving force can drive a lens to rotate or translate, thereby implementing optical image stabilization.

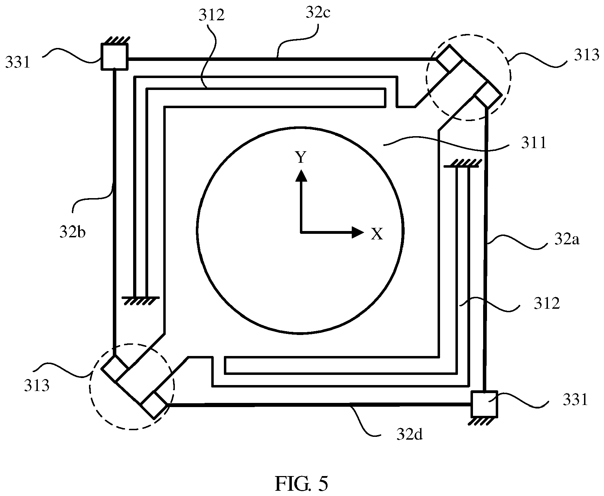

FIG. 4 is a schematic exploded view of an SMA assembly according to an embodiment of this application. For ease of understanding, FIG. 5 is a simplified schematic diagram of the SMA assembly in FIG. 4 in a plane perpendicular to a direction of an optical axis. The SMA assembly 300 may be an example of the OIS assembly 240 in FIG. 2. To be specific, the SMA assembly 300 is configured to implement optical image stabilization. Refer to FIG. 4 and FIG. 5. The SMA assembly 300 includes an elastomer 31, an SMA line 32, a fastener 33, and the like.

The elastomer 31 includes an elastomer body 311 and at least one elastomer cantilever 312. Each elastomer cantilever 312 in the at least one elastomer cantilever extends from the elastomer body 311, and extends along an edge of the elastomer body 311. One end of the elastomer cantilever 312 is connected to the elastomer body 311, and the other end is connected to the fastener 33. For example, as shown in FIG. 4, a contact portion 312a is disposed at an end of the elastomer cantilever 312, and the contact portion 312a is configured to connect to the fastener 33. The at least one elastomer cantilever is a centrosymmetric figure. To be specific, the at least one elastomer cantilever still overlaps itself after being rotated by 180°. For example, the at least one elastomer cantilever includes two elastomer cantilevers, and the two elastomer cantilevers are centrosymmetric.

The elastomer 31 further includes two movable grippers 313 connected to the elastomer body 311, and the two movable grippers 313 are centrosymmetric. The movable gripper 313 is configured to fix one end of the SMA line 32. For example, the elastomer body 31 is approximately square, and the movable grippers 313 may be located on a diagonal of the elastomer body 311. The movable gripper 313 may be a folding stamping structure or an interference hole structure. This is not limited in this embodiment of this application, provided that one end of the SMA line can be fixed.

A through hole 314 is further provided in the elastomer body 311 for rays to pass through to reach a sensor group. The through hole 314 is further configured to connect to the lens assembly shown in FIG. 2, so that when the elastomer body 314 moves, the lens assembly can be driven to move together. The through hole 314 is provided at a central position of the elastomer body 311. It should be understood that the central position of the elastomer body 311 and a circle center of the through hole 314 are both located on an optical axis of a lens.

In this embodiment of this application, the elastomer 31 may be a leaf spring, and may be made of a material such as a copper alloy, tin bronze, zinc white copper, beryllium bronze, silicon-manganese steel, or the like. This is not limited in this embodiment of this application. The movable grippers 313 disposed on the elastomer 31 are made of a conductive material.

Two centrosymmetric fixed grippers 331 are disposed on the fastener 33, and the fixed gripper 331 is configured to fix the other end of the SMA line. The fixed gripper 331 may be a folding stamping structure or an interference hole structure. This is not limited in this embodiment of this application, provided that the other end of the SMA line can be fixed. The two fixed grippers 331 on the fastener 33 and the two movable grippers 313 disposed on the elastomer body 311 are cross-shaped in the plane perpendicular to the direction of the optical axis. The two fixed grippers 331 and the two movable grippers 313 may be approximately considered four angles of a quadrilateral, and the fixed grippers 331 and the movable grippers 313 are distributed around the elastomer body 311 in a staggered manner.

A through hole 332 is further provided in the fastener 33, and is used for rays to pass through to reach the sensor assembly. The through hole 314 is provided at a central position of the fastener 33.

In this embodiment of this application, the fastener 33 may be a metal plate, an insulating plate, a printed circuit board, or the like, and the fixed grippers 331 are made of a conductive material. A shape of the fastener 33 is not specifically limited in this embodiment of this application, and a person skilled in the art may correspondingly design the shape of the fastener 33 based on an actual requirement.

The SMA assembly 300 includes four SMA lines 32. One SMA line is used as an example. One end of the SMA line 32 is fixed to the movable gripper 313 disposed on the elastomer body 311, the other end is fixed to the fixed gripper 331 disposed on the fastener 33, and the SMA line is suspended and keeps a particular distance from other parts. Refer to SMA lines 32a, 32b, 32c, and 32d in FIG. 5. The four SMA lines may be located in a same plane and enclose a quadrilateral outside the elastomer 31. The SMA lines may be approximately considered four edges of the quadrilateral. An SMA has characteristics such as a shape memory effect, high damping, a high driving stress strain, high energy density, relatively high energy efficiency, a relatively low action frequency, and phase change induced plasticity. Therefore, the SMA line 32 has dual functions of sensing and driving, and can generate a relatively large reversible shape response stress and strain.

In this embodiment of this application, a position of the fastener 33 is relatively fixed. In the following description, the fastener 33 is considered a stationary member. One end of the elastomer cantilever 312 is fixedly connected to the fastener 33, and the end is considered a fixed end of the elastomer 31 in the following description. The elastomer body 311 and the movable grippers 313 are movable relative to the fixed end of the elastomer cantilever 312, and are considered a movable end of the elastomer 31 in the following description. One SMA line is used as an example. One end of the SMA line 32 is connected to the fixed gripper 331 on the fastener 33, and the other end is connected to the movable gripper 313 on the elastomer 31. Therefore, one end of the SMA line 32 that is connected to the fixed gripper 331 is a fixed end, and one end connected to the movable gripper 313 is a movable end (or referred to as a free end). After a current is fed into the SMA line, a temperature of the SMA line may be changed by changing a magnitude of the current, so that the SMA line outputs a force or a displacement to the outside, to drive a lens to move.

In this embodiment of this application, a conductive trace may be disposed on the fastener 33 and the elastomer body 311, for current conduction. Specifically, whether the conductive trace needs to be disposed and how to dispose the wire trace may be correspondingly determined based on a material actually used by the fastener 33, a shape of the fastener 33, and a shape of the elastomer 31. This is not further limited herein.

The fixed grippers 331 and the contact portion 312a of the elastomer cantilever 312 are fixed, and the fixed grippers 331 and the contact portion 312a may be fixed on a same component, for example, a steel sheet or a printed circuit board, or may be fixed on different components. This is not limited in this embodiment of this application. The fixed grippers 331 and the fixed end of the elastomer 31 are electrically connected to the printed circuit board (including a direct or indirect electrical connection). When the SMA lines 32 are energized, the current may flow from the printed circuit board through the fixed grippers 331, the SMA lines 32, the movable grippers 314, the elastomer cantilever 314, and finally back to the printed circuit board via the fixed end of the elastomer cantilever 314.

A principle of implementing optical image stabilization by the SMA assembly 300 is as follows: When an electronic device shakes, a sensor, such as a gyroscope, that is in the electronic device and that is configured to detect a posture of the electronic device may output a jitter angular velocity signal of the electronic device. After obtaining the signal, a processor in the electronic device may control the magnitude of the current on the SMA lines, and the SMA lines shrink or stretch, to control the movable end (including the elastomer body 311 and the movable grippers 313) of the elastomer 31 to move. A lens assembly (for example, the lens assembly 220 in FIG. 2) is mounted on the elastomer 31, and the elastomer 31 drives the lens assembly to move along a direction perpendicular to the optical axis (namely, an X and/or a Y direction) to track shake of the electronic device, to counteract impact caused by the shake of the electronic device on imaging, thereby implementing optical image stabilization.

Specifically, in a process of optical image stabilization, OIS actions in two directions may be respectively implemented by energizing two groups of SMA lines in the X direction and the Y direction, and feedback control needs to be performed in the two directions, so that a position of the lens is consistent with a required position determined by the electronic device based on the jitter angular velocity. As mentioned above, the SMA has dual functions of sensing and driving. When the SMA current changes, a length and a diameter of the SMA lines change, further causing resistance of the SMA to change. By obtaining resistance values of the four SMA lines, a current position of the lens can be obtained, and an error signal of feedback control can be obtained based on a difference between the position and the required position calculated based on the jitter angular velocity. A drive chip in the electronic device makes the error signal zero by using a control algorithm. For example, closed-loop control on the position of the lens can be implemented by further adjusting the current fed into the SMA lines.

In this embodiment of this application, optical image stabilization is mainly implemented through cooperation between energization of the SMA lines 32 and elastic deformation of the elastomer 31. However, in actual application, a mechanical crosstalk effect (crosstalk effect) occurs in a control process due to a limitation of the structure of the elastomer itself. To be specific, when OIS in one direction is turned off, and only the OIS action in the other direction is performed, a jitter occurs in the direction, of the lens, in which the OIS action is not performed.

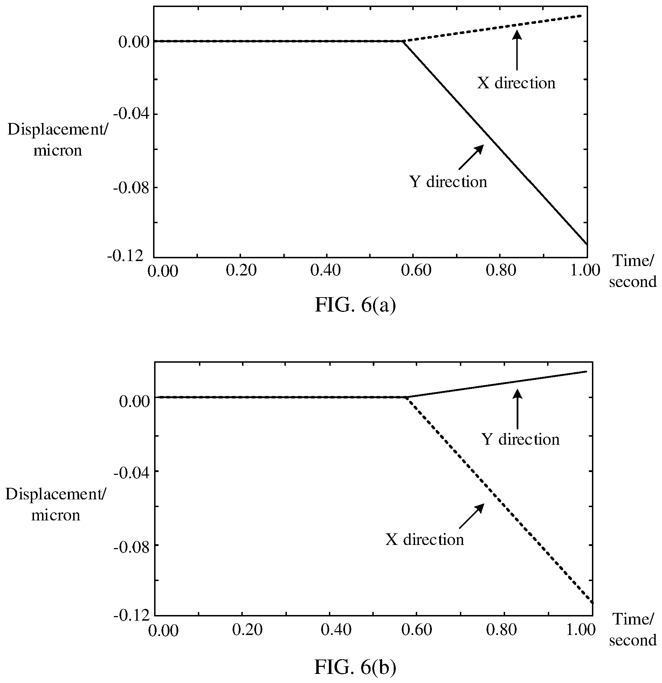

Specifically, FIG. 6(a) and FIG. 6(b) are schematic diagrams of simulation on the SMA assembly shown in FIG. 5. A solid line in the figure represents displacement of a center of the movable end of the elastomer in the Y direction, and a dotted line represents displacement of the center of the movable end of the elastomer in the X direction. It should be understood that in this implementation of this application, the movable end of the elastomer includes the elastomer body and the movable grippers disposed on the elastomer body, and the lens is mounted on the movable end of the elastomer, so that the center of the movable end of the elastomer corresponds to a center of the lens. It should be further understood that values of horizontal and vertical coordinates in the figure are merely examples, and this embodiment of this application is not limited thereto.

As shown in FIG. 6(a), in this embodiment of this application, only the SMA line 32a in the SMA assembly shown in FIG. 5 is energized (the SMA lines 32b, 32c, and 32d are not energized). That is, only one SMA line in the Y direction is energized, and the other three SMA lines are not energized. It can be learned from the figure that, the center of the movable end of the elastomer not only moves in the Y direction, but also moves in the X direction, and displacement of the center of the movable end of the elastomer in the X direction is approximately 12% of that in the Y direction. In other words, mechanical crosstalk occurs in the X direction when OIS in the Y direction is performed. Similarly, as shown in FIG. 6(b), in this embodiment of this application, only the SMA line 32c in the SMA assembly shown in FIG. 5 is energized (the SMA lines 32a, 32b, and 32d are not energized). That is, only one SMA line in the X direction is energized, and the other three SMA lines are not energized. It can be learned from the figure that, the center of the movable end of the elastomer not only moves in the X direction, but also moves in the Y direction, and displacement of the center of the movable end of the elastomer in the Y direction is approximately 12% of that in the X direction. In other words, mechanical crosstalk occurs in the Y direction when OIS in the X direction is performed.

It can be understood that when a single SMA line in the SMA assembly is energized, although mechanical crosstalk occurs, because the remaining unenergized SMA lines have a restraining effect on the elastomer, the mechanical crosstalk effect is alleviated. To obtain the crosstalk effect caused by the elastomer itself, in the following embodiment, the SMA lines are removed, and only the elastomer is simulated.

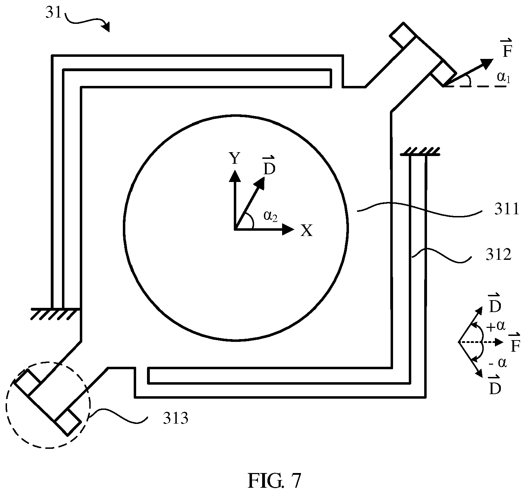

FIG. 7 is a schematic diagram of an elastomer simulation model according to an embodiment of this application. As shown in FIG. 7, SMA lines are removed from an SMA assembly, one end of an elastomer cantilever 312 is connected to an elastomer body 311, and the other end is fixed. When acting forces in different directions are applied to a movable gripper 313, a relationship between the acting forces in different directions and a displacement direction of a center of a movable end of an elastomer (namely, a movement direction of the elastomer) can be obtained. It should be understood that the acting forces applied to the movable gripper 313 after the SMA lines are removed are equivalent to acting forces applied by the SMA line to the movable gripper 313.

It should be noted that, when an acting force is applied to the movable gripper of the elastomer, the acting force may be equivalent to a same acting force applied to a center of the elastomer and a bending moment that enables the elastomer to rotate. Because rotation of the elastomer caused by the bending moment is unrelated to mechanical crosstalk, elastomer rotation caused by the bending moment is not concerned in this embodiment of this application, and only translation of the center of the elastomer caused by the acting force is concerned.

For ease of description, the acting force applied to the movable gripper 313 is demoted as F̅, where an included angle between F̅ and a positive direction of X is denoted as α1, and α1 is an angle of rotation of F̅ in an anticlockwise direction relative to the positive direction of X, namely, the direction of the force. A range of α1 is [0°, 360°]. The displacement of the center of the movable end of the elastomer is denoted as D̅, where an included angle between D̅ and the positive direction of X is denoted as α2, and α2 is an angle of rotation of D̅ in an anticlockwise direction relative to the positive direction of X, namely, the movement direction of the elastomer. A range of α1 is [0°, 360°]. An included angle between F̅ and D̅ is denoted as α, α = 〈F̅, D̅〉 , where when a displacement vector D̅ rotates in a clockwise direction relative to an acting force vector F̅, α is denoted as negative, and when the displacement vector D̅ rotates in an anticlockwise direction relative to the acting force vector F̅, α is denoted as positive. A range of α is [-180°, 180°].

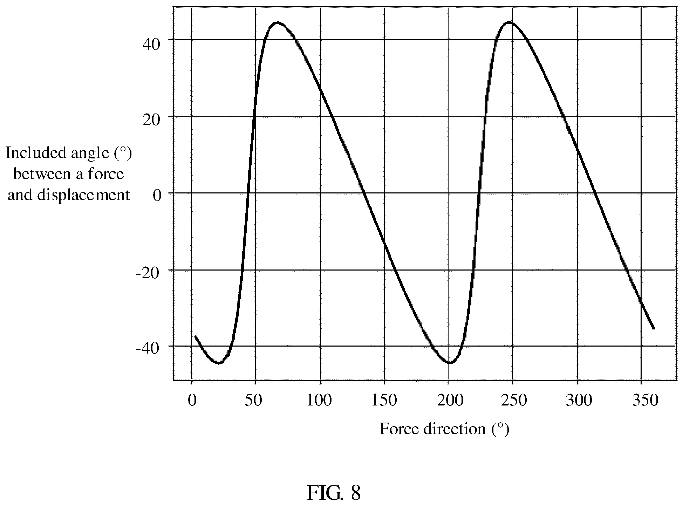

FIG. 8 is a schematic diagram of a simulation result of the elastomer simulation model in FIG. 7. As shown in FIG. 8, a horizontal coordinate is a direction of an acting force applied to the elastomer (specifically the movable gripper), and a vertical coordinate is an included angle between the acting force and a displacement direction of the elastomer. It can be learned from the figure that, when the acting forces in different directions are applied to the elastomer, only included angles between acting forces in four directions and the displacement are 0 (namely, the directions of the acting forces are consistent with the movement direction of the elastomer), and in other directions, acting directions of the forces are inconsistent with the movement direction of the center of the movable end of the elastomer, namely, mechanical crosstalk occurs. Table 1 shows data in some special directions in FIG. 8.

**Table 1**

| Force direction (α1) | 0° | 90° | 180° | 270° | 45° | 135° | 225° | 315° |
|---|---|---|---|---|---|---|---|---|
| Displacement direction (α2) | 325° | 125° | 145° | 305° | 45° | 135° | 225° | 315° |
| Included angle between the force and the displacement (α) | -35° | 35° | -35° | 35° | 0° | 0° | 0° | 0° |

It can be learned from FIG. 8 and Table 1 that, for the elastomer simulation model shown in FIG. 7, when an application direction on the movable gripper of the elastomer is 0°, 90°, 180°, or 270° (namely, a pull force direction of a single SMA line), the displacement direction of the center of the movable end of the elastomer is inconsistent with the direction of the acting force, and mechanical crosstalk exists. Consequently, when OIS is turned off in the X direction or the Y direction and only OIS action in the other direction is performed, a jitter occurs in the direction, of the lens, in which the OIS is not performed. In an actual control process, although feedback control is performed in both X and Y directions, the foregoing mechanical crosstalk can be suppressed by improving the algorithm, but the crosstalk makes a system transfer function complex, and increases control difficulty. The crosstalk effect can only be weakened by using the control algorithm, but cannot be fundamentally eliminated. An OIS crosstalk phenomenon that occurs in actual application seriously affects performance of OIS (namely, a compression ratio).

The embodiments of this application will provide an elastomer designing method, and an elastomer structure obtained based on the elastomer designing method, so that mechanical crosstalk can be prominently weakened or eliminated.

It can be learned from FIG. 8 and Table 1 that, for the elastomer simulation model shown in FIG. 7, when an acting force is applied to the movable gripper of the elastomer in a direction of approximately 45°, 135°, 225°, or 315°, namely, two directions that are perpendicular to each other, the direction of the force is consistent with the displacement direction of the center of the movable end of the elastomer. Actually, for most elastomer structures, there are two directions that are perpendicular to each other (denoted as a first direction and a second direction in this embodiment of this application). No mechanical crosstalk exists when an acting force is applied in the two directions. To be specific, when the acting force is applied in the two directions, the movement direction of the elastomer is the same as the direction of the acting force.

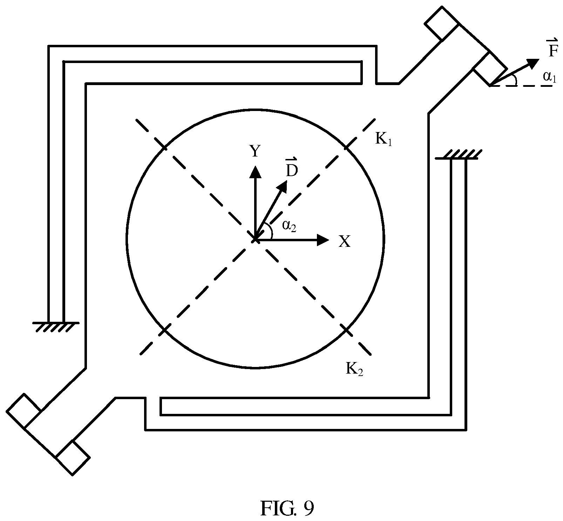

For the elastomer itself, there is a K value in any direction. The K value in this embodiment of this application represents a ratio of a magnitude of an acting force applied to the elastomer to a magnitude of displacement of the elastomer in the direction of the acting force in a case of a small deformation, and a unit of the K value is newton/meter (N/m). The elastomer has two K values in the foregoing two directions that are perpendicular to each other. It is assumed that the K value of the elastomer in the first direction is K₁, and the K value of the elastomer in the second direction is K₂. K₁ represents a ratio of the magnitude of the acting force applied in the first direction to the magnitude of displacement of the center of the movable end of the elastomer in the first direction, and K₂ represents a ratio of the magnitude of the acting force applied in the second direction to the magnitude of displacement of the center of the movable end of the elastomer in the second direction. For the elastomer simulation model shown in FIG. 7, the first direction and the second direction thereof are shown by dashed lines in FIG. 9. The first direction is a direction from 45° to 225°, and the second direction is a direction from 135° to 315°.

Refer to FIG. 9. Because the acting force in any direction applied to the movable gripper of the elastomer may be decomposed in the first direction and the second direction (namely, directions in which there is no mechanical crosstalk), it is easy to know that when K₁=K₂, the displacement direction of the center of the movable end of the elastomer is always consistent with the direction of the applied acting force. Therefore, there is no mechanical crosstalk when an action of any direction is applied to the movable gripper of the elastomer. When K₁≠K₂, and when the acting force is applied only in the first direction and the second direction, the displacement direction of the center of the movable end of the elastomer is always consistent with the direction of the applied acting force. Therefore, there is no mechanical crosstalk when the acting force in the first direction or the acting force in the second direction is applied to the movable gripper of the elastomer.

Specifically, it is assumed that the acting force applied to the movable gripper of the elastomer is F̅, and a magnitude of the acting force that is of F̅ and that is decomposed in the first direction is F₁, and a magnitude of the acting force that is of F̅ and that is decomposed in the second direction is F₂. It is assumed that the displacement of the center of the movable end of the elastomer is D̅, a magnitude of the displacement that is of D̅ and that is decomposed in the first direction is D₁, and a magnitude of the displacement that is of D̅ and that is decomposed in the second direction is D₂. When K₁=K₂, F₁/D₁=F₂/D₂, and F₁/F₂=D₁/D₂ can be obtained. In this way, the component force F₁ in the first direction is combined with the component force F₂ in the second direction to obtain the resultant force F̅. The component displacement D₁ in the first direction is combined with the component displacement D₂ in the second direction to obtain a resultant displacement D̅, and directions of F̅ and D̅ are the same. When K₁≠K₂, only when F̅ is in the first direction or the second direction, the component force of F̅ in the other direction is 0, the center of the movable end of the elastomer moves along the direction of F̅, and the displacement direction of the center of the movable end of the elastomer is consistent with the direction of the applied acting force. Therefore, there is no mechanical crosstalk when the acting force in the first direction or the acting force in the second direction is applied to the movable gripper of the elastomer. When the direction of F̅ is not in the first direction or the second direction, F̅ is decomposed in the first direction and the second direction, F₁/D₁≠F₂/D₂, and F₁/F₂≠D₁/D₂ may be obtained. In this way, the component force F₁ in the first direction is combined with the component force F₂ in the second direction to obtain the resultant force F̅, and the component displacement D₁ in the first direction is combined with the component displacement D₂ in the second direction, to obtain the resultant displacement D̅, directions of F̅ and D̅ are different, and mechanical crosstalk exists. Particularly, when a difference between K₁ and K₂ is relatively large, mechanical crosstalk is obvious, seriously affecting performance of OIS.

Based on the foregoing principle analysis, an embodiment of this application provides an elastomer designing method. A new elastomer structure can be obtained based on an existing elastomer. The new elastomer structure itself does not have mechanical crosstalk or only has weak mechanical crosstalk.

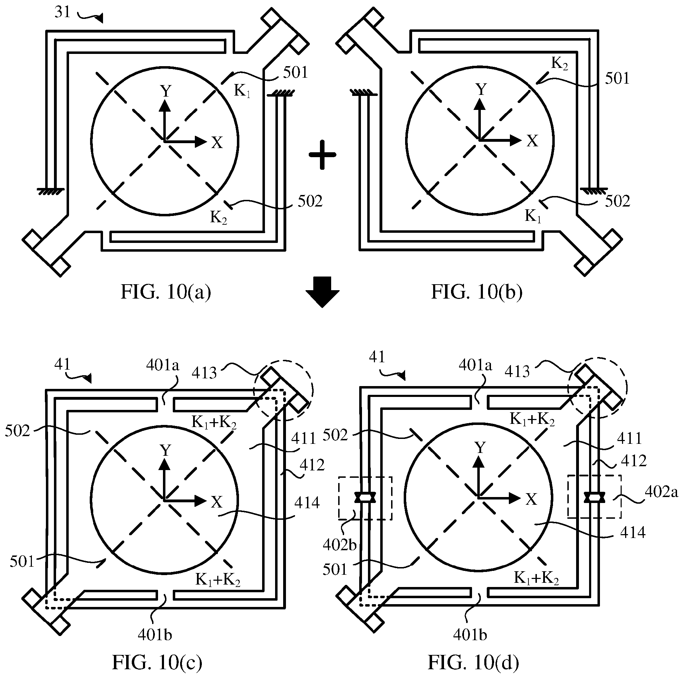

FIG. 10(a), FIG. 10(b), FIG. 10(c), and FIG. 10(d) are schematic structural diagrams of elastomers according to an embodiment of this application.

As shown in FIG. 10(a), FIG. 10(b), FIG. 10(c), and FIG. 10(d), an elastomer shown in FIG. 10(a) is the same as the elastomer in FIG. 9, and a K value of the elastomer in a first direction 501 is K₁, and a K value of the elastomer in a second direction 502 is K₂. An elastomer shown in FIG. 10(b) is axisymmetric with the elastomer shown in FIG. 10(a). To be specific, the elastomer shown in FIG. 10(b) is obtained by flipping the elastomer shown in FIG. 10(a) by using a symmetry axis of the first direction 501 and the second direction 502 as an axis, and a K value of the elastomer in the first direction 501 is K₂, and a K value of the elastomer in the second direction 502 is K₁. To make the K value in the first direction 501 equal to the K value in the second direction 502, an elastomer 41 shown in FIG. 10(c) may be obtained based on the elastomers shown in FIG. 10(a) and FIG. 10(b).

Refer to the elastomer shown in FIG. 10(c). The elastomer 41 includes an elastomer body 411 and at least one elastomer cantilever 412. Each of the at least one elastomer cantilever 412 is connected to the elastomer body 411, and extends along an outer edge of the elastomer body 411. The at least one elastomer cantilever 412 is axisymmetric. The elastomer 41 includes the first direction 501 and the second direction 502 that are perpendicular to each other. A K value of the elastomer 41 in the first direction 501 is equal to a K value of the elastomer 41 in the second direction 502, and the K value is a ratio of a magnitude of an acting force applied to the elastomer 41 to a magnitude of displacement of the elastomer 41 in a direction of the acting force. For example, based on the elastomers shown in FIG. 10(a) and FIG. 10(b), it can be learned that the K value of the elastomer 41 in the first direction 501 is (K₁+K₂), and the K value of the elastomer 41 in the second direction 502 is also (K₁+K₂). The K values of the elastomer 41 in the two directions that are perpendicular to each other are equal, so that when an acting force in any direction is applied to the elastomer 41, a movement direction of the elastomer 41 is consistent with the direction of the acting force, and a mechanical crosstalk effect can be alleviated or eliminated.

It should be understood that, in an actual elastomer structure design, the K values of the elastomer 41 in the first direction and the second direction are not necessarily exactly equal. Due to a process error, a processing error, and the like, when a difference between the K value of the elastomer 41 in the first direction and the K value of elastomer 41 in the second direction is less than a preset threshold, an effect of reducing mechanical crosstalk can also be achieved. To be specific, when the K value of the elastomer 41 in the first direction is close to the K value of the elastomer 41 in the second direction or the difference between the K values is very small, when an acting force in any direction is applied to the elastomer 41, an included angle between the movement direction of the elastomer and the direction of the force is very small, for example, less than 5°, and only weak mechanical crosstalk is generated.

For ease of understanding, the following embodiments of this application are all described by using an example in which the K value of the elastomer in the first direction is equal to the K value of the elastomer in the second direction. However, it should be understood that, in this embodiment of this application, when the difference between the K value of the elastomer in the first direction and the K value of the elastomer in the second direction is less than the preset threshold, it is correspondingly understood that, when an acting force is applied to the elastomer, a value of an included angle between a movement direction of the elastomer and a direction of the acting force (the directions are not considered) is less than a preset angle.

Optionally, the preset angle is 5°.

In this embodiment of this application, that the at least one elastomer cantilever is axisymmetric may be understood as that any elastomer cantilever in the at least one elastomer cantilever can overlap another elastomer cantilever after being flipped along a symmetry axis. Alternatively, if the at least one elastomer cantilever is considered a whole, the at least one elastomer cantilever is an axisymmetric figure. To be specific, the at least one elastomer cantilever can overlap itself after being flipped by 180° as a whole. In this embodiment of this application, when the elastomer is applied to an SMA motor, the symmetry axis of the at least one elastomer cantilever is perpendicular to an optical axis, and intersects with the optical axis.

It should be understood that, in this embodiment of this application, a symmetry axis of the first direction 501 and the second direction 502 is the same as the symmetry axis of the at least one elastomer cantilever 412. Therefore, in other words, the first direction 501 and the second direction 502 are symmetric with respect to the symmetry axis of the at least one elastomer cantilever 412. In this way, the K values of the elastomer 41 in the first direction 501 and the second direction 502 are equal to a sum of K values of the elastomer 31 in two directions in which there is no mechanical crosstalk.

Optionally, the elastomer 41 further includes grippers 413 connected to the elastomer body 411, and the grippers 413 are centrosymmetric. For example, the elastomer 41 includes two grippers 413. The two grippers 413 are located on opposite sides in the first direction 501 or the second direction 502 of the elastomer body 411. It should be understood that, positions of the grippers 413 need to be determined based on the first direction 501 and the second direction 502. For elastomers 31 with different structures, directions in which there is no mechanical crosstalk are different. The first direction 501 and the second direction 502 that are obtained through simulation may be different from those obtained in FIG. 9. In actual application, a person skilled in the art may correspondingly determine positions and a quantity of grippers of the elastomer 41 based on an actual structure of the elastomer 31. This is not further limited in this embodiment of this application.

In this embodiment of this application, there may be a plurality of grippers 413. That the plurality of grippers are centrosymmetric may be understood as that any gripper in the plurality of grippers can overlap another gripper after being rotated by 180°. Alternatively, if the plurality of grippers are considered a whole, the plurality of grippers are a centrosymmetric figure. To be specific, the plurality of grippers can overlap themselves after being rotated by 180° as a whole.

Optionally, the elastomer cantilever 412 may be located above the grippers 413, or located below the grippers 413. This may be specifically determined based on an actual situation. For example, as shown in FIG. 10(c), the elastomer body 411 may be in a warped shape at the grippers 413, so that the grippers 413 and the elastomer body 411 are located in different planes. In this way, the elastomer cantilever 412 can run through from above or below the grippers 413 without interference.

Optionally, a through hole 414 is provided at a center of the elastomer body 411. A circle center of the through hole 414 may overlap an intersection between the first direction 501 and the second direction 502.

Optionally, the elastomer cantilever 412 and the elastomer body 411 may be integral. Namely, the elastomer cantilever 412 and the elastomer body 411 are integrally formed. Alternatively, the elastomer cantilever 412 and the elastomer body 411 may be fixedly connected to each other. That is, the elastomer cantilever 412 is fixedly connected to the elastomer body 411 in a manner such as welding.

Correspondingly, when the elastomer 41 provided in this embodiment of this application is applied to an SMA assembly, the elastomer 31 in the SMA assembly 300 shown in FIG. 4 may be replaced with the elastomer 41 shown in FIG. 10(a), FIG. 10(b), FIG. 10(c), and FIG. 10(d).

An embodiment of this application provides an SMA assembly. The SMA assembly includes a fastener (for example, the fastener 33 in FIG. 4), an elastomer (for example, the elastomer 41 shown in FIG. 10(a), FIG. 10(b), FIG. 10(c), and FIG. 10(d)), and shape memory alloy SMA lines. One end of the SMA line is connected to the fastener, and the other end is connected to the elastomer. The elastomer (for example, the elastomer 41 shown in FIG. 10(a), FIG. 10(b), FIG. 10(c), and FIG. 10(d)) includes an elastomer body and at least one elastomer cantilever. Each of the at least one elastomer cantilever is connected to the elastomer body and extends along an outer edge of the elastomer body. The elastomer cantilever is connected to the fastener at a predetermined position of an extending part. The at least one elastomer cantilever is axisymmetric. It should be understood that, the position at which the elastomer cantilever is connected to the fastener may be specifically correspondingly determined based on a structure and a quantity of elastomer cantilevers, and the predetermined position may be an end of the elastomer cantilever, or a middle position or another position of the elastomer cantilever.

Optionally, the elastomer 41 further includes movable grippers (for example, the grippers 413 in FIG. 10(a), FIG. 10(b), FIG. 10(c), and FIG. 10(d)) connected to the elastomer body 411, and the movable grippers are centrosymmetric. The fastener may include centrosymmetric fixed grippers. The fixed grippers disposed on the fastener and the movable grippers disposed on the elastomer body are distributed in a staggered manner. For example, one end of the SMA line is connected to the fixed gripper, and the other end is connected to the movable gripper.

Optionally, a quantity of the fixed grippers disposed on the fastener may be two, and a quantity of the movable grippers disposed on the elastomer body may be two. In this way, the two fixed grippers and the two movable grippers may form four angles of a quadrilateral. One SMA line is connected between one fixed gripper and one movable gripper that are adjacent to each other, so that movement of a lens in one direction can be implemented. However, it should be understood that, the quantity of the fixed grippers and the quantity of the movable grippers may alternatively be other quantities, for example, three, four, and six. In this way, the fixed grippers and the movable grippers that are distributed in a staggered manner can form vertex angles of a hexagon, an octagon, a dodecagon, and the like around the elastomer body. An SMA line is connected between any fixed gripper and movable gripper that are adjacent to each other. The SMA line may implement movement of a lens in one direction.

It should be understood that, in this embodiment of this application, one movable gripper (or fixed gripper) may fix two SMA lines. For example, one movable gripper (or fixed gripper) includes two folding stamping sheets, and each of the folding stamping sheets may fix one SMA line.

In this embodiment of this application, a quantity of the at least one elastomer cantilever included in the elastomer may be one, two, four, or more. The following describes a specific form of the elastomer cantilever with reference to the accompanying drawings.

For example, refer to FIG. 10(c). The elastomer 41 includes one elastomer cantilever 412, and the elastomer cantilever 412 extends around the elastomer body 411 to form a shape of a closed ring. A line connecting positions 401a and 401b at which the elastomer cantilever 412 is connected to the elastomer body 411 is a symmetry axis of the elastomer cantilever 412, and/or the positions 401a and 401b at which the elastomer cantilever 412 is connected to the elastomer body 411 are symmetric with respect to the symmetry axis of the elastomer cantilever 412. For example, as shown in FIG. 10(a), FIG. 10(b), FIG. 10(c), and FIG. 10(d), the line connecting the positions 401a and 401b at which the elastomer cantilever 412 is connected to the elastomer body 411 runs through the circle center of the through hole 414, that is, runs through the intersection between the first direction 501 and the second direction 502 shown by dashed lines. Because the elastomer cantilever 412 is an axisymmetric figure, it includes two symmetry axes. For the symmetry axis in the X direction, the positions 401a and 401b at which the elastomer cantilever 412 is connected to the elastomer body 411 are symmetric with respect to the symmetry axis of the elastomer cantilever 412. For the symmetry axis in the Y direction, the line connecting the positions 401a and 401b at which the elastomer cantilever 412 is connected to the elastomer body 411 is the symmetry axis of the elastomer cantilever 412.

Correspondingly, refer to FIG. 10(d). When the elastomer 41 is applied to the SMA assembly, a line connecting positions 402a and 402b at which the elastomer cantilever 412 is connected to the fastener is the symmetry axis of the elastomer cantilever 412, and/or the positions 402a and 402b at which the elastomer cantilever 412 is connected to the fastener are symmetric with respect to the symmetry axis of the elastomer cantilever 412. For example, as shown in FIG. 10(a), FIG. 10(b), FIG. 10(c), and FIG. 10(d), the line connecting the positions 402a and 402b at which the elastomer cantilever 412 is connected to the fastener runs through the circle center of the through hole 414, that is, runs through the intersection between the first direction 501 and the second direction 502 shown by dashed lines. Because the elastomer cantilever 412 is an axisymmetric figure, it includes two symmetry axes. For the symmetry axis in the X direction, the line connecting the positions 402a and 402b at which the elastomer cantilever 412 is connected to the fastener is the symmetry axis of the elastomer cantilever 412. For the symmetry axis in the Y direction, the positions 402a and 402b at which the elastomer cantilever 412 is connected to the fastener are symmetric with respect to the symmetry axis of the elastomer cantilever 412.

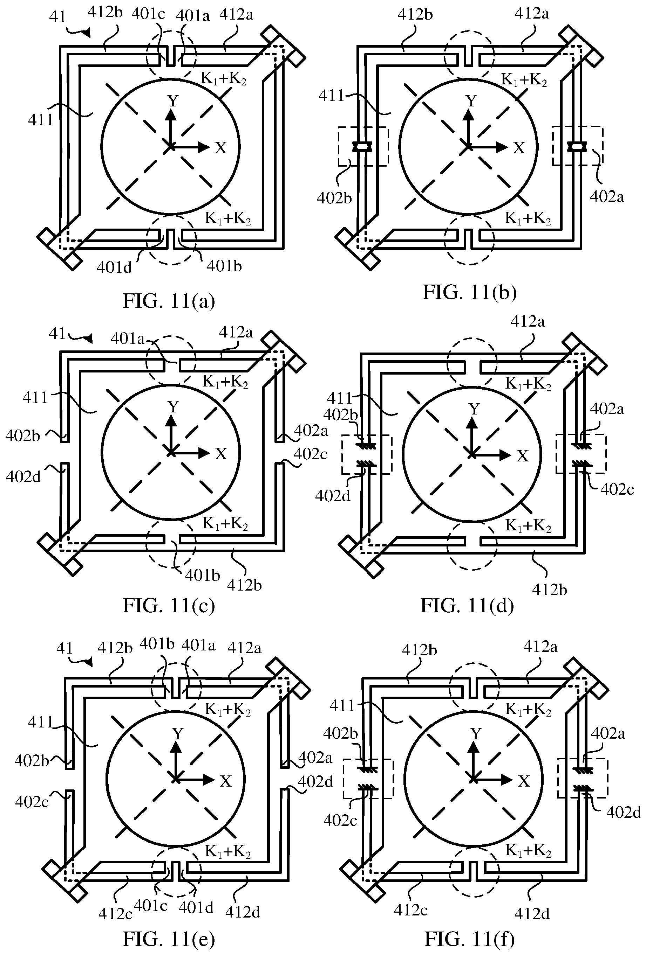

In another example, refer to FIG. 11(a). The elastomer 41 includes two elastomer cantilevers 412a and 412b, and the two elastomer cantilevers are axisymmetric. Two ends 401a and 401b of the elastomer cantilever 412a are connected to the elastomer body 411, and two ends 401c and 401d of the elastomer cantilever 412b are connected to the elastomer body 411.

Correspondingly, refer to FIG. 11(b). When the elastomer 41 is applied to the SMA assembly, middle positions of the two elastomer cantilevers 412a and 412b are connected to the fastener. A position 402a at which the elastomer cantilever 412a is connected to the fastener and a position 402b at which the elastomer cantilever 412b is connected to the fastener are symmetric with respect to the symmetry axis in the Y direction.

In another example, refer to FIG. 11(c). The elastomer 41 includes two elastomer cantilevers 412a and 412b, and the two elastomer cantilevers are axisymmetric. Middle positions of the elastomer cantilevers 412a and 412b are connected to the elastomer body 411, and two ends of the elastomer cantilevers 412a and 412b are free ends. For example, as shown in the figure, the middle position 401a of the elastomer cantilever 412a is connected to the elastomer body 411, and the two ends 402a and 402b of the elastomer cantilever 412a are free ends. The middle position 401b of the elastomer cantilever 412b is connected to the elastomer body 411, and the two ends 402c and 402d of the elastomer cantilever 412b are free ends.

Correspondingly, refer to FIG. 11(d). When the elastomer 41 is applied to the SMA assembly, the middle positions of the two elastomer cantilevers 412a and 412b are connected to the elastomer body 411, and the two ends of the two elastomer cantilevers 412a and 412b are connected to the fastener. In other words, the two free ends 402a and 402b of the elastomer cantilever 412a are connected to the fastener, and the two free ends 402c and 402d of the elastomer cantilever 412b are connected to the fastener.

In still another example, refer to FIG. 11(e). The elastomer 41 includes four elastomer cantilevers 412a, 412, 412c, and 412d, one end of each of the four elastomer cantilevers (for example, 401a, 401b, 401c, or 401d) is connected to the elastomer body 411, and the other end (for example, 402a, 402b, 402c, or 402d) is a free end. For example, as shown in the figure, the elastomer cantilever 412a is used as an example. The fixed end 401a of the elastomer cantilever 412a is connected to the elastomer body 411, and the other end of the elastomer cantilever 412a is the free end 402a.

Correspondingly, refer to FIG. 11(f). When the elastomer 41 is applied to the SMA assembly, one end of each of the four elastomer cantilevers 412a, 412, 412c, and 412d is connected to the elastomer body 411, and the other end is connected to the fastener. In other words, the free end 402a, 402b, 402c, or 402d of each of the four elastomer cantilevers is connected to the fastener.

It should be understood that the quantity and structural form of the elastomer cantilevers included in the elastomer in this embodiment of this application are merely examples. In some other embodiments, the elastomer may further include another quantity of elastomer cantilevers, for example, elastomer cantilevers with a quantity of an integer multiple of 2, provided that all the elastomer cantilevers are axisymmetric. A person skilled in the art may correspondingly design the quantity of the elastomer cantilevers, a distance between two adjacent elastomer cantilevers, a specific structural form of the elastomer cantilevers, and the like based on an actual requirement. Details are not described herein again.

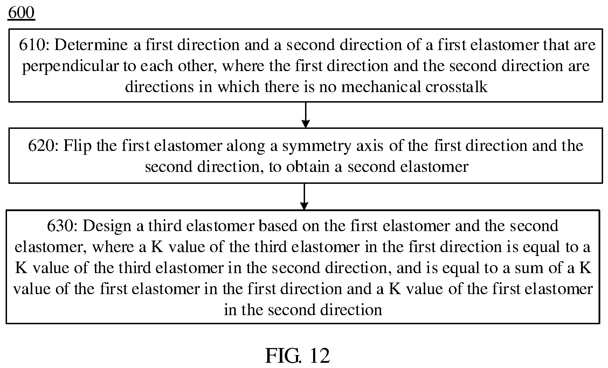

In conclusion, this embodiment of this application provides the elastomer designing method, and the elastomer structure obtained based on the elastomer designing method does not have mechanical crosstalk or only has weak mechanical crosstalk. FIG. 12 is a schematic flowchart of an elastomer designing method according to an embodiment of this application. As shown in FIG. 12, the method 600 includes step 610 to step 630.

610: Determine a first direction and a second direction of a first elastomer that are perpendicular to each other, where the first direction and the second direction are directions in which there is no mechanical crosstalk.

For example, the first elastomer may be, for example, the elastomer 31 shown in FIG. 7, or an elastomer in another structural form with mechanical crosstalk.

The first direction and the second direction in this embodiment of this application are directions in which there is no mechanical crosstalk. It should be understood that, when an acting force is applied to the elastomer in a particular direction, if the movement direction of the elastomer is approximately the same as the direction of the acting force, it is considered that the direction is a direction in which there is no mechanical crosstalk. In this embodiment of this application, the direction in which there is no mechanical crosstalk also includes a case in which there is weak mechanical crosstalk. Because the mechanical crosstalk is very weak, the mechanical crosstalk may be ignored.

For example, the first direction and the second direction of the first elastomer may be determined by using the method shown in FIG. 7. A structure of the first elastomer is simplified into an elastomer simulation model, and then acting forces in different directions are applied to the first elastomer (specifically to a movable gripper on the first elastomer), to determine directions when included angles between the movement direction of the elastomer and the directions of the acting forces are 0, namely, the first direction and the second direction.

In some other embodiments, the first direction and the second direction of the first elastomer may alternatively be determined by using an experimental method.

620: Flip the first elastomer along a symmetry axis of the first direction and the second direction, to obtain a second elastomer.

The first direction and the second direction have two symmetry axes. Therefore, the first elastomer may be flipped along any symmetry axis. The obtained second elastomer and the first elastomer are figures axisymmetric with each other. Moreover, a K value of the second elastomer in the first direction is a K value of the first elastomer in the second direction, and a K value of the second elastomer in the second direction is a K value of the first elastomer in the first direction.

630: Design a third elastomer based on the first elastomer and the second elastomer, where a K value of the third elastomer in the first direction is equal to a K value of the third elastomer in the second direction, and is equal to a sum of a K value of the first elastomer in the first direction and a K value of the first elastomer in the second direction, and the K value is a ratio of a magnitude of an acting force applied to the elastomer to a magnitude of displacement of the elastomer in a direction of the acting force.

It should be understood that, the first direction and the second direction in this embodiment of this application may be understood as absolute directions. In step 630, when the third elastomer is designed based on the first elastomer and the second elastomer, a structural form of an elastomer cantilever of the third elastomer is mainly designed.

Optionally, the first elastomer includes a first elastomer body and at least one first elastomer cantilever, each of the at least one first elastomer cantilever extends along an outer edge of the first elastomer body, one end of each first elastomer cantilever is connected to the first elastomer body, and the other end is a free end. For example, the first elastomer may be the elastomer 31 shown in FIG. 10(a).

Optionally, the third elastomer includes a second elastomer body and at least one second elastomer cantilever, each of the at least one second elastomer cantilever is connected to the second elastomer body and extends along an outer edge of the second elastomer body, and the at least one second elastomer cantilever is axisymmetric. For example, the third elastomer may be, for example, the elastomer 41 shown in FIG. 10(c), or the elastomer 41 shown in FIG. 11(a), FIG. 11(b), FIG. 11(c), FIG. 11(d), FIG. 11(e), and FIG. 11(f).

Optionally, in step 610, the determining a first direction and a second direction of a first elastomer that are perpendicular to each other based on simulation may specifically include: fixing the free end of the first elastomer cantilever, and applying acting forces in different directions to the first elastomer; determining displacement directions of the first elastomer body under the acting forces in different directions; and when the displacement directions of the first elastomer body are the same as the directions of the acting forces applied to the first elastomer, determining that the directions of the acting forces are the first direction and the second direction.

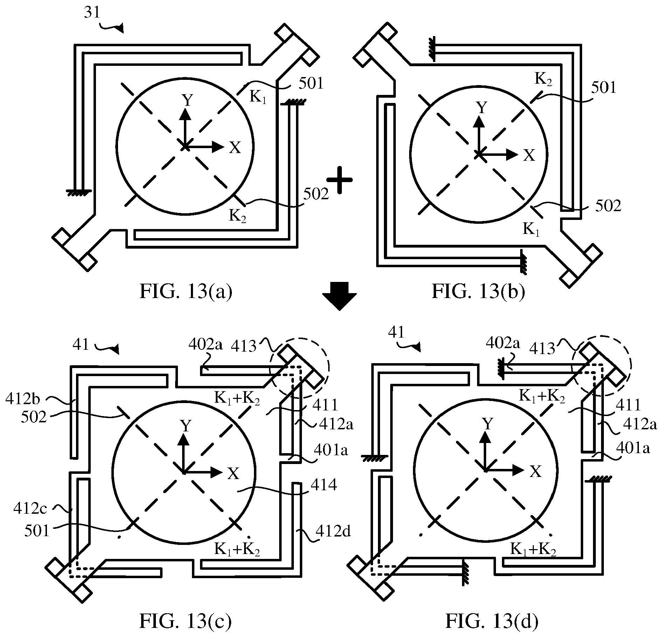

FIG. 13(a), FIG. 13(b), FIG. 13(c), and FIG. 13(d) are schematic structural diagrams of elastomers according to an embodiment of this application.

As shown in FIG. 13(a), FIG. 13(b), FIG. 13(c), and FIG. 13(d), an elastomer shown in FIG. 13(a) is the same as the elastomer in FIG. 9, and a K value of the elastomer in a first direction 501 is K₁, and a K value of the elastomer in a second direction 502 is K₂. An elastomer shown in FIG. 13(b) is 90° rotationally symmetric with the elastomer shown in FIG. 13(a). To be specific, the elastomer shown in FIG. 13(b) is obtained by rotating the elastomer shown in FIG. 13(a) around a Z axis by 90°, and a K value of the elastomer in the first direction 501 is K₂, and a K value of the elastomer in the second direction 502 is K₁. To make the K value in the first direction 501 equal to the K value in the second direction 502, an elastomer 41 shown in FIG. 13(c) may be obtained based on the elastomers shown in FIG. 13(a) and FIG. 13(b).

Refer to the elastomer shown in FIG. 13(c). The elastomer 41 includes an elastomer body 411 and at least one elastomer cantilever 412. Each of the at least one elastomer cantilever 412 is connected to the elastomer body 411, and extends along an outer edge of the elastomer body 411. The at least one elastomer cantilever 412 is 90° rotationally symmetric. The elastomer 41 includes the first direction 501 and the second direction 502 that are perpendicular to each other. A K value of the elastomer 41 in the first direction 501 is equal to a K value of the elastomer 41 in the second direction 502. For example, based on the elastomers shown in FIG. 13(a) and FIG. 13(b), it can be learned that the K value of the elastomer 41 in the first direction 501 is (K₁+K₂), and the K value of the elastomer 41 in the second direction 502 is also (K₁+K₂). The K values of the elastomer 41 in the two directions that are perpendicular to each other are equal, so that when an acting force in any direction is applied to the elastomer 41, a movement direction of the elastomer 41 is consistent with the direction of the acting force, and a mechanical crosstalk effect can be alleviated or eliminated.

In this embodiment of this application, that the at least one elastomer cantilever is 90° rotationally symmetric may be understood as that any elastomer cantilever in the at least one elastomer cantilever can overlap another elastomer cantilever after being rotated by 90°. Alternatively, if the at least one elastomer cantilever is considered a whole, the at least one elastomer cantilever is a 90° rotationally symmetric figure. To be specific, the at least one elastomer cantilever can overlap itself after being rotated by 90° as a whole. In this embodiment of this application, when the elastomer is applied to an SMA motor, a rotating shaft of the at least one elastomer cantilever is an optical axis.

Optionally, the elastomer 41 further includes grippers 413 connected to the elastomer body 411, and the grippers 413 are centrosymmetric. For example, the elastomer 41 includes two grippers 413. The two grippers 413 are located on opposite sides in the first direction 501 or the second direction 502 of the elastomer body 411. It should be understood that, positions of the grippers 413 need to be determined based on the first direction 501 and the second direction 502. For elastomers 31 with different structures, directions in which there is no mechanical crosstalk are different. The first direction 501 and the second direction 502 that are obtained through simulation may be different from those obtained in FIG. 9. In actual application, a person skilled in the art may correspondingly determine positions and a quantity of grippers of the elastomer 41 based on an actual structure of the elastomer 31. This is not further limited in this embodiment of this application.

Optionally, the elastomer cantilever 412 may be located above the grippers 413, or located below the grippers 413. This may be specifically determined based on an actual situation. For example, as shown FIG. 13(c), the elastomer body 411 may be in a warped shape at the grippers 413, so that the grippers 413 and the elastomer body 411 are located in different planes. In this way, the elastomer cantilever 412 can run through from above or below the grippers 413 without interference.

Optionally, a through hole 414 is provided at a center of the elastomer body 411. A circle center of the through hole 414 may overlap an intersection between the first direction 501 and the second direction 502.

Correspondingly, when the elastomer 41 provided in this embodiment of this application is applied to an SMA assembly, the elastomer 31 in the SMA assembly 300 shown in FIG. 4 may be replaced with the elastomer 41 shown in FIG. 13(a), FIG. 13(b), FIG. 13(c), and FIG. 13(d).

An embodiment of this application provides an SMA assembly. The SMA assembly includes a fastener (for example, the fastener 33 in FIG. 4), an elastomer (for example, the elastomer 41 shown in FIG. 13(a), FIG. 13(b), FIG. 13(c), and FIG. 13(d)), and shape memory alloy SMA lines. One end of the SMA line is connected to the fastener, and the other end is connected to the elastomer. The elastomer (for example, the elastomer 41 shown in FIG. 13(a), FIG. 13(b), FIG. 13(c), and FIG. 13(d)) includes an elastomer body and at least one elastomer cantilever. Each of the at least one elastomer cantilever is connected to the elastomer body and extends along an outer edge of the elastomer body. The elastomer cantilever is connected to the fastener at a predetermined position of an extending part. The at least one elastomer cantilever is 90° rotationally symmetric. It should be understood that, the position at which the elastomer cantilever is connected to the fastener may be specifically correspondingly determined based on a structure and a quantity of elastomer cantilevers, and the predetermined position may be an end of the elastomer cantilever, or a middle position or another position of the elastomer cantilever.

It should be understood that, in this embodiment of this application, if the at least one elastomer cantilever is 90° rotationally symmetric, one of two adjacent elastomer cantilevers may be obtained by rotating the other elastomer cantilever by 90°.

Optionally, the elastomer 41 further includes movable grippers (for example, the grippers 413 in FIG. 13(a), FIG. 13(b), FIG. 13(c), and FIG. 13(d)) connected to the elastomer body 411, and the movable grippers are centrosymmetric. The fastener may include centrosymmetric fixed grippers. The fixed grippers disposed on the fastener and the movable grippers disposed on the elastomer body are distributed in a staggered manner. For example, one end of the SMA line is connected to the fixed gripper, and the other end is connected to the movable gripper.

Optionally, the quantity of the fixed grippers disposed on the fastener is equal to the quantity of the movable grippers disposed on the elastomer body, and may be two, three, four, six, or the like. In this way, the fixed grippers and the movable grippers distributed around the elastomer body in a staggered manner may be approximated as angles of a polygon. An SMA line is connected between any fixed gripper and movable gripper that are adjacent to each other. The SMA line may implement movement of a lens in one direction.

In this embodiment of this application, a quantity of the at least one elastomer cantilever included in the elastomer may be four, eight, or more. The following describes a specific form of the elastomer cantilever with reference to the accompanying drawings.

For example, refer to FIG. 13(c). The elastomer 41 includes four elastomer cantilevers 412a, 412, 412c, and 412d, one end of each of the four elastomer cantilevers is connected to the elastomer body 411, and the other end is a free end. For example, as shown in the figure, the elastomer cantilever 412a is used as an example. A fixed end 401a of the elastomer cantilever 412a is connected to the elastomer body 411, and the other end of the elastomer cantilever 412a is a free end 402a.

Correspondingly, refer to FIG. 13(d). When the elastomer 41 is applied to the SMA assembly, one end of each of the four elastomer cantilevers is connected to the elastomer body 411, and the other end is connected to the fastener. In other words, the free end of each of the four elastomer cantilevers is connected to the fastener.

It should be understood that the quantity and structural form of the elastomer cantilevers included in the elastomer in this embodiment of this application are merely examples. In some other embodiments, the elastomer may further include another quantity of elastomer cantilevers, for example, elastomer cantilevers with a quantity of an integer multiple of 4, provided that all the elastomer cantilevers are 90° rotationally symmetric. A person skilled in the art may correspondingly design the quantity of the elastomer cantilevers, a distance between two adjacent elastomer cantilevers, a specific structural form of the elastomer cantilevers, and the like based on an actual requirement. Details are not described herein again.

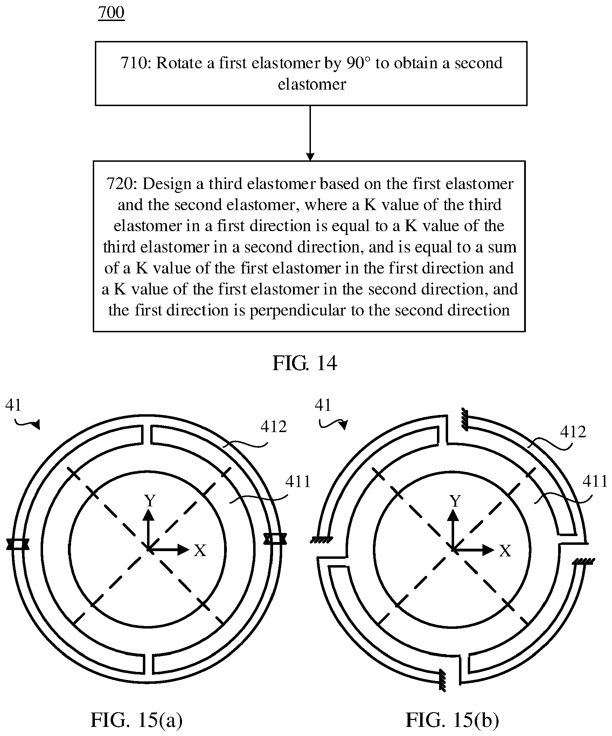

In conclusion, this embodiment of this application provides another elastomer designing method, and the elastomer structure obtained based on the elastomer designing method does not have mechanical crosstalk or only has weak mechanical crosstalk. FIG. 14 is a schematic flowchart of an elastomer designing method according to an embodiment of this application. As shown in FIG. 14, the method 700 includes step 710 and step 720.

710: Rotate a first elastomer by 90° to obtain a second elastomer.

For example, the first elastomer may be, for example, the elastomer 31 shown in FIG. 7, or an elastomer in another structural form with mechanical crosstalk.

720: Design a third elastomer based on the first elastomer and the second elastomer, where a K value of the third elastomer in the first direction is equal to a K value of the third elastomer in the second direction, and is equal to a sum of a K value of the first elastomer in the first direction and a K value of the first elastomer in the second direction, the first direction is perpendicular to the second direction, and the K value is a ratio of a magnitude of an acting force applied to the elastomer to a magnitude of displacement of the elastomer in a direction of the acting force.

It should be understood that, the first direction and the second direction in this embodiment of this application may be understood as absolute directions. In step 720, when the third elastomer is designed based on the first elastomer and the second elastomer, a structural form of an elastomer cantilever of the third elastomer is mainly designed. In this embodiment of this application, the first elastomer is rotated by 90° to obtain the second elastomer. To be specific, the K value of the first elastomer in the first direction is a K value of the second elastomer in the second direction, and the K value of the first elastomer in the second direction is a K value of the second elastomer in the first direction.

Optionally, the first elastomer includes a first elastomer body and at least one first elastomer cantilever, each of the at least one first elastomer cantilever extends along an outer edge of the first elastomer body, one end of each first elastomer cantilever is connected to the first elastomer body, and the other end is a free end. For example, the first elastomer may be the elastomer 31 shown in FIG. 13(a).

Optionally, the third elastomer includes a second elastomer body and at least one second elastomer cantilever, each of the at least one second elastomer cantilever is connected to the second elastomer body and extends along an outer edge of the second elastomer body, and the at least one second elastomer cantilever is 90° rotationally symmetric. For example, the third elastomer may be the elastomer 41 shown in FIG. 13(c).

Optionally, in this embodiment of this application, the elastomer body of the elastomer may be a square (for example, as shown in FIG. 10(a), FIG. 10(b), FIG. 10(c), and FIG. 10(d) or FIG. 13(a), FIG. 13(b), FIG. 13(c), and FIG. 13(d)), a circle, a polygon, an irregular pattern, or the like. This is not specifically limited in this embodiment of this application. It should be understood that, when the elastomer cantilever extends along the edge of the elastomer body, the shape of the elastomer cantilever may be correspondingly adjusted and changed with the shape of the elastomer body.

FIG. 15(a) and FIG. 15(b) are schematic structural diagrams of elastomers according to an embodiment of this application. As shown in FIG. 15(a), an elastomer 41 is similar to the elastomer 41 shown in FIG. 10(c), and a difference lies in that an elastomer body 411 shown in FIG. 15(a) is approximately circular. At least one elastomer cantilever 412 is disposed around the elastomer body 411, and the elastomer cantilever 412 is approximately annular. Connection relationships in which the remaining structures and the elastomer are applied to an SMA assembly are similar to those in FIG. 10(c) and FIG. 10(d). The at least one elastomer cantilever 412 is axisymmetric. For details, refer to related descriptions in FIG. 10(a), FIG. 10(b), FIG. 10(c), and FIG. 10(d). Details are not described herein again. It should be understood that similar to the elastomer shown in FIG. 11(a), FIG. 11(b), FIG. 11(c), FIG. 11(d), FIG. 11(e), and FIG. 11(f), when the elastomer body is approximately circular, based on different quantities of elastomer cantilevers included in the elastomer, the elastomer cantilever may be in a shape of an arc, a semicircle, a folding line, a curve, or the like. This is not limited in this embodiment of this application.

As shown in FIG. 15(b), the elastomer 41 is similar to the elastomer 41 shown in FIG. 13(c), and a difference lies in that the elastomer body 411 shown in FIG. 15(b) is approximately circular. The at least one elastomer cantilever 412 is disposed around the elastomer body 411, each elastomer cantilever 412 is approximately arc-shaped, and a plurality of elastomer cantilevers 412 enclose an approximate circle. Connection relationships in which the remaining structures and the elastomer are applied to the SMA assembly are similar to those in FIG. 13(c) and FIG. 13(d). The at least one elastomer cantilever 412 is 90° rotationally symmetric. For details, refer to related descriptions in FIG. 13(a), FIG. 13(b), FIG. 13(c), and FIG. 13(d). Details are not described herein again.

In summary, in the elastomer provided in this embodiment of this application, an outer edge of the elastomer body may be polygonal (for example, square), circular, or in another shape. In the elastomer provided in this embodiment of this application, a single elastomer cantilever may be in a shape of an arc, a semicircle, a folding line, a curve, a square, or the like. The at least one elastomer cantilever extending around the elastomer body may enclose a polygon, a circle, or another shape.

In this embodiment of this application, mechanical crosstalk in optical image stabilization may be reduced or eliminated by using one optimized elastomer, or mechanical crosstalk in an OIS process may be reduced or eliminated by using a combination of a plurality of elastomers.

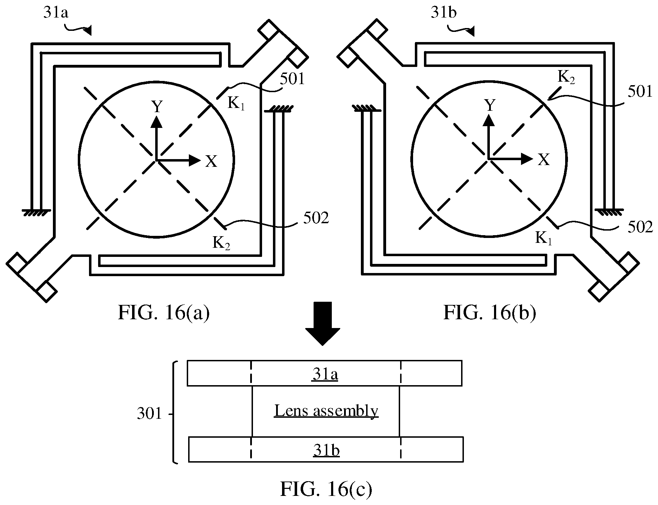

FIG. 16(a), FIG. 16(b), and FIG. 16(c) are schematic structural diagrams of an elastomer assembly according to an embodiment of this application.

As shown in FIG. 16(a), FIG. 16(b), and FIG. 16(c), an elastomer 31a shown in FIG. 16(a) is the same as the elastomer in FIG. 9, and a K value of the elastomer in a first direction 501 is K₁, and a K value of the elastomer in a second direction 502 is K₂. An elastomer 31b shown in FIG. 16(b) is axisymmetric with the elastomer 31a shown in FIG. 16(a). To be specific, the elastomer 31b shown in FIG. 16(b) is obtained by flipping the elastomer 31a shown in FIG. 16(a) by using a symmetry axis of the first direction 501 and the second direction 502 as an axis, and a K value of the elastomer in the first direction 501 is K₂, and a K value of the elastomer in the second direction 502 is K₁.

Refer to FIG. 16(c). The elastomer assembly 301 includes an upper elastomer 31a and a lower elastomer 31b. The lower elastomer 31b may be obtained by flipping the upper elastomer 31a by 180°. The upper elastomer 31a and the lower elastomer 31 are spaced from each other along a Z axis (namely, a direction of an optical axis). It should be understood that relative positions of the upper and lower elastomers in the elastomer assembly in the figure are merely an example, and should not be understood as a limitation on this application.

For the entire elastomer assembly 301, the elastomer assembly 301 includes the first direction 501 and the second direction 502 that are perpendicular to each other. A K value of the elastomer assembly 301 in the first direction 501 is equal to a K value of the elastomer assembly 301 in the second direction 502, and is equal to a sum of the K value of the upper elastomer 31a in the first direction 501 and the K value of the upper elastomer 31a in the second direction 502. In this way, the K value of the elastomer assembly 301 in the first direction 501 is (K₁+K₂), and the K value of the elastomer assembly 301 in the second direction 502 is also (K₁+K₂). The K values of the elastomer assembly 301 in the two directions that are perpendicular to each other are equal, so that when an acting force in any direction is applied to the elastomer assembly 301, a movement direction of the elastomer assembly 301 is consistent with the direction of the acting force, and a mechanical crosstalk effect can be alleviated or eliminated.

Optionally, in some other embodiments, the lower elastomer 31b may alternatively be obtained by rotating the upper elastomer 31a by 90°, and the elastomer assembly formed in this manner has the same technical effect as described above, and details are not described herein again.

Correspondingly, an embodiment of this application provides an SMA assembly. The SMA assembly includes a fastener, an elastomer assembly (for example, the elastomer assembly 301 shown in FIG. 16(a), FIG. 16(b), and FIG. 16(c)), and SMA lines. One end of the SMA line is connected to the fastener, and the other end is connected to the elastomer assembly. The elastomer assembly includes an upper elastomer and a lower elastomer, and the lower elastomer may be obtained by flipping or rotating the upper elastomer by 90°. The upper elastomer includes an elastomer body and an elastomer cantilever, one end of the elastomer cantilever is connected to the elastomer body, and the other end is connected to the fastener.

Optionally, the upper elastomer further includes movable grippers connected to the elastomer body, and the movable grippers are centrosymmetric. The fastener includes centrosymmetric fixed grippers, and the fixed grippers and the movable grippers are distributed in a staggered manner. One end of the SMA line is connected to the movable gripper, and the other end is connected to the fixed gripper.

In some embodiments, the upper elastomer and the lower elastomer may respectively correspond to respective fasteners. In other words, an assembly configured to implement OIS in an electronic device may include an upper SMA assembly and a lower SMA assembly. The upper SMA assembly includes an upper elastomer, an upper fastener corresponding to the upper elastomer, and SMA lines connected between the upper elastomer and the upper fastener. Similarly, the lower SMA assembly includes a lower elastomer, a lower fastener corresponding to the lower elastomer, and SMA lines connected between the lower elastomer and the lower fastener. The upper SMA assembly and the lower SMA assembly may separately control OIS. In some embodiments, same currents are fed into SMA lines at corresponding positions in the upper SMA assembly and the lower SMA assembly, and then the upper SMA assembly and the lower SMA assembly may achieve an effect similar to an effect achieved by the elastomer 41 in FIG. 10(c) and FIG. 10(d) and the elastomer 41 in FIG. 13(c) and FIG. 13(d).

In some embodiments, the upper elastomer and the lower elastomer may correspond to a same fastener, and SMA lines connected to the upper elastomer and the lower elastomer are both connected to the fastener. For example, a quantity of fixed grippers disposed on the fastener may be twice of the quantity of the movable grippers disposed on the upper elastomer.

It should be understood that a person skilled in the art may correspondingly design, based on an actual requirement, a fastener connected to the elastomer assembly. This embodiment of this application is merely described as an example, and should not be understood as a limitation on this application.

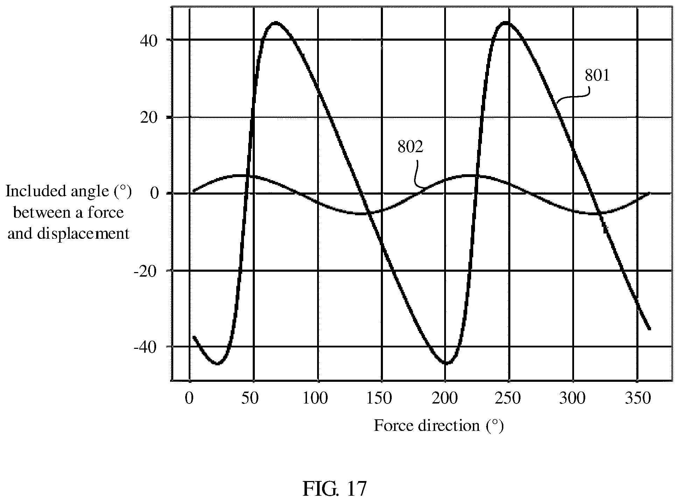

FIG. 17 is a schematic diagram of a simulation result of an elastomer structure according to an embodiment of this application. As shown in FIG. 17, a horizontal coordinate is a direction in which a force is applied, a vertical coordinate is an included angle between the direction of the acting force and a displacement direction of a center of a movable end of an elastomer. A curve 801 may represent a simulation effect of the elastomer structure shown in FIG. 7, and a curve 802 may represent a simulation effect of the elastomer 41 in FIG. 10(a), FIG. 10(b), FIG. 10(c), and FIG. 10(d) or FIG. 13(a), FIG. 13(b), FIG. 13(c), and FIG. 13(d). It can be learned from the figure that, fluctuation of the curve 802 in the vertical coordinate is significantly less than that of the curve 801. In other words, a mechanical crosstalk phenomenon of the elastomer 41 is significantly improved. Table 2 shows data in several special directions.

**Table 2**

| Force direction (α1) | | 0° | 90° | 180° | 270° | 45° | 135° | 225° | 315° |
|---|---|---|---|---|---|---|---|---|---|
| Displacement direction (α2) | Elastomer 31 | 325° | 125° | 145° | 305° | 45° | 135° | 225° | 315° |
| | Elastomer 41 | 0° | 89° | 180° | 269° | 49° | 131° | 229° | 311° |
| Included angle between the force and the displacement (α) | Elastomer 31 | -35° | 35° | -35° | 35° | 0° | 0° | 0° | 0° |
| | Elastomer 41 | 0° | -1° | 0° | -1° | 4° | -4° | 4° | -4° |

It can be learned from the table that, the mechanical crosstalk phenomenon of the optimized elastomer 41 is improved by 90%. Residual mechanical crosstalk is due to that a shape of the elastomer in an actual simulation process is more complex than that of the simplified elastomer simulation model in the figure and that two directions in which there is no mechanical crosstalk overlap in an interchanging manner may not be completely satisfied.

It should be noted that, in this embodiment of this application, the technical solution provided in this application is described by using only one basic elastomer, for example, the elastomer 31 shown in FIG. 7 as an example. For a basic elastomer in another structural form, based on the elastomer designing method or an elastomer combination structure provided in this embodiment of this application, an elastomer or an elastomer assembly in another form may be obtained. Such an elastomer or elastomer assembly does not have mechanical crosstalk or only has weak mechanical crosstalk, and optical image stabilization performance can be improved.

In the description of this application, it should be noted that, unless otherwise expressly specified and limited, the terms "mount", "connected", and "connection" should be understood in a broad sense, and may be, for example, a fixed connection, a detachable connection, or an integral connection; may be a mechanical connection, or an electrical connection; may be a direct connection, or an indirect connection by using an intermediate medium, or a connection between interiors of two elements. A person of ordinary skill in the art may understand specific meanings of the foregoing terms in this application based on specific situations.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A shape memory alloy SMA assembly, comprising: a fastener, an elastomer, and shape memory alloy SMA lines, wherein
one end of the SMA line is connected to the fastener, and the other end is connected to the elastomer; and
the elastomer comprises an elastomer body and at least one elastomer cantilever, wherein
the elastomer cantilever is connected to the elastomer body and extends along an outer edge of the elastomer body,
the elastomer cantilever is connected to the fastener at a predetermined position of an extending part, and
the at least one elastomer cantilever is axisymmetric or 90° rotationally symmetric.

2. The SMA assembly according to claim 1, wherein a difference between a K value of the elastomer in a first direction and a K value of the elastomer in a second direction is less than a preset threshold, the first direction is perpendicular to the second direction, and the K value is a ratio of a magnitude of an acting force applied to the elastomer to a magnitude of displacement of the elastomer in a direction of the acting force.

3. The SMA assembly according to claim 2, wherein when the at least one elastomer cantilever is axisymmetric, the first direction and the second direction are symmetric with respect to a symmetry axis of the at least one elastomer cantilever.

4. The SMA assembly according to any one of claims 1 to 3, wherein
the elastomer further comprises movable grippers connected to the elastomer body, wherein the movable grippers are centrosymmetric;
the fastener comprises centrosymmetric fixed grippers, wherein the fixed grippers and the movable grippers are distributed in a staggered manner; and
one end of the SMA line is connected to the movable gripper, and the other end is connected to the fixed gripper.

5. The SMA assembly according to any one of claims 1 to 4, wherein a through hole is provided at a center of the elastomer body.

6. The SMA assembly according to any one of claims 1 to 5, wherein when the at least one elastomer cantilever is axisymmetric,
the at least one elastomer cantilever comprises one elastomer cantilever, and the elastomer cantilever is in a shape of a closed ring, wherein
a line connecting positions at which the elastomer cantilever is connected to the elastomer body is a symmetry axis of the elastomer cantilever, and/or the positions at which the elastomer cantilever is connected to the elastomer body are symmetric with respect to the symmetry axis of the elastomer cantilever; or
a line connecting positions at which the elastomer cantilever is connected to the fastener is a symmetry axis of the elastomer cantilever, and/or the positions at which the elastomer cantilever is connected to the fastener are symmetric with respect to the symmetry axis of the elastomer cantilever; or
the at least one elastomer cantilever comprises two elastomer cantilevers, two ends of each of the two elastomer cantilevers are connected to the elastomer body, and a middle position of each of the two elastomer cantilevers is connected to the fastener; or
the at least one elastomer cantilever comprises two elastomer cantilevers, a middle position of each of the two elastomer cantilevers is connected to the elastomer body, and two ends of each of the two elastomer cantilevers are connected to the fastener; or
the at least one elastomer cantilever comprises four elastomer cantilevers, one end of each of the four elastomer cantilevers is connected to the elastomer body, and the other end is connected to the fastener.

7. The SMA assembly according to any one of claims 1 to 5, wherein when the at least one elastomer cantilever is 90° rotationally symmetric,
the at least one elastomer cantilever comprises four elastomer cantilevers, one end of each of the four elastomer cantilevers is connected to the elastomer body, and the other end is connected to the fastener.

8. The SMA assembly according to any one of claims 1 to 7, wherein the outer edge of the elastomer body is square or circular.

9. The SMA assembly according to any one of claims 1 to 8, wherein the at least one elastomer cantilever encloses a square or a circle around the outer edge of the elastomer body.

10. The SMA assembly according to any one of claims 1 to 9, wherein the fastener is a metal plate and/or a printed circuit board.

11. An SMA assembly, comprising: a fastener, an elastomer assembly, and SMA lines, wherein
one end of the SMA line is connected to the fastener, and the other end is connected to the elastomer assembly; and
the elastomer assembly comprises an upper elastomer and a lower elastomer, and the lower elastomer is obtained after the upper elastomer is flipped or rotated by 90°, wherein
the upper elastomer comprises an elastomer body and an elastomer cantilever, one end of the elastomer cantilever is connected to the elastomer body, and the other end is connected to the fastener.

12. The SMA assembly according to claim 11, wherein a K value of the elastomer assembly in a first direction is equal to a K value of the elastomer assembly in a second direction, and is equal to a sum of a K value of the upper elastomer in the first direction and a K value of the upper elastomer in the second direction, and the first direction is perpendicular to the second direction, wherein the K value is a ratio of a magnitude of an acting force applied to the elastomer to a magnitude of displacement of the elastomer in a direction of the acting force.

13. The SMA assembly according to claim 11 or 12, wherein
the upper elastomer further comprises movable grippers connected to the elastomer body, wherein the movable grippers are centrosymmetric;
the fastener comprises centrosymmetric fixed grippers, wherein the fixed grippers and the movable grippers are distributed in a staggered manner; and
one end of the SMA line is connected to the movable gripper, and the other end is connected to the fixed gripper.

14. The SMA assembly according to any one of claims 11 to 13, wherein a through hole is provided at a center of the elastomer body.

15. A lens module, comprising a lens assembly and the SMA assembly according to any one of claims 1 to 14, wherein the lens assembly is connected to the SMA assembly.

16. An electronic device, comprising the SMA assembly according to any one of claims 1 to 14, or comprising the lens module according to claim 15.

17. An elastomer, comprising an elastomer body and at least one elastomer cantilever, wherein
the elastomer cantilever is connected to the elastomer body and extends along an outer edge of the elastomer body; and
the at least one elastomer cantilever is axisymmetric or 90° rotationally symmetric.

18. The elastomer according to claim 17, wherein a difference between a K value of the elastomer in a first direction and a K value of the elastomer in a second direction is less than a preset threshold, the first direction is perpendicular to the second direction, and the K value is a ratio of a magnitude of an acting force applied to the elastomer to a magnitude of displacement of the elastomer in a direction of the acting force.

19. The elastomer according to claim 18, wherein when the at least one elastomer cantilever is axisymmetric, the first direction and the second direction are symmetric with respect to a symmetry axis of the at least one elastomer cantilever.

20. The elastomer according to any one of claims 17 to 19, wherein the elastomer further comprises grippers connected to the elastomer body, and the grippers are centrosymmetric.

21. The elastomer according to any one of claims 17 to 20, wherein a through hole is provided at a center of the elastomer body.

22. The elastomer according to any one of claims 17 to 21, wherein when the at least one elastomer cantilever is axisymmetric,
the at least one elastomer cantilever comprises one elastomer cantilever, and the elastomer cantilever is in a shape of a closed ring, wherein a line connecting positions at which the elastomer cantilever is connected to the elastomer body is a symmetry axis of the elastomer cantilever, and/or the positions at which the elastomer cantilever is connected to the elastomer body are symmetric with respect to the symmetry axis of the elastomer cantilever; or
the at least one elastomer cantilever comprises two elastomer cantilevers, and two ends of each of the two elastomer cantilevers are connected to the elastomer body; or
the at least one elastomer cantilever comprises two elastomer cantilevers, a middle position of each of the two elastomer cantilevers is connected to the elastomer body, and two ends of each of the at least two elastomer cantilevers are free ends; or
the at least one elastomer cantilever comprises four elastomer cantilevers, one end of each of the four elastomer cantilevers is connected to the elastomer body, and the other end is a free end.

23. The elastomer according to any one of claims 17 to 21, wherein when the at least one elastomer cantilever is 90° rotationally symmetric,
the at least one elastomer cantilever comprises four elastomer cantilevers, one end of each of the four elastomer cantilevers is connected to the elastomer body, and the other end is a free end.

24. The elastomer according to any one of claims 17 to 23, wherein the outer edge of the elastomer body is square or circular.

25. The elastomer according to any one of claims 17 to 24, wherein the at least one elastomer cantilever encloses a square or a circle around the outer edge of the elastomer body.

26. An elastomer designing method, comprising:
determining a first direction and a second direction of a first elastomer that are perpendicular to each other, wherein the first direction and the second direction are directions in which there is no mechanical crosstalk;
flipping the first elastomer along a symmetry axis of the first direction and the second direction, to obtain a second elastomer; and
designing a third elastomer based on the first elastomer and the second elastomer, wherein a K value of the third elastomer in the first direction is equal to a K value of the third elastomer in the second direction, and is equal to a sum of a K value of the first elastomer in the first direction and a K value of the first elastomer in the second direction, and the K value is a ratio of a magnitude of an acting force applied to the elastomer to a magnitude of displacement of the elastomer in a direction of the acting force.

27. The method according to claim 26, wherein
the first elastomer comprises a first elastomer body and at least one first elastomer cantilever, each of the at least one first elastomer cantilever extends along an outer edge of the first elastomer body, one end of each first elastomer cantilever is connected to the first elastomer body, and the other end is a free end; and
the third elastomer comprises a second elastomer body and at least one second elastomer cantilever, each of the at least one second elastomer cantilever is connected to the second elastomer body and extends along an outer edge of the second elastomer body, and the at least one second elastomer cantilever is axisymmetric.

28. The method according to claim 27, wherein the determining a first direction and a second direction of a first elastomer that are perpendicular to each other comprises:
fixing the free end of the first elastomer cantilever, and applying acting forces in different directions to the first elastomer;
determining displacement directions of the first elastomer body under the acting forces in different directions; and
when the displacement directions of the first elastomer body are the same as the directions of the acting forces applied to the first elastomer, determining that the directions of the acting forces are the first direction and the second direction.

29. An elastomer designing method, comprising:
rotating a first elastomer by 90° to obtain a second elastomer; and
designing a third elastomer based on the first elastomer and the second elastomer, wherein a K value of the third elastomer in a first direction is equal to a K value of the third elastomer in a second direction, and is equal to a sum of a K value of the first elastomer in the first direction and a K value of the first elastomer in the second direction, the first direction is perpendicular to the second direction, and the K value is a ratio of a magnitude of an acting force applied to the elastomer to a magnitude of displacement of the elastomer in a direction of the acting force.

30. The method according to claim 29, wherein
the first elastomer comprises a first elastomer body and at least one first elastomer cantilever, each of the at least one first elastomer cantilever extends along an outer edge of the first elastomer body, one end of each first elastomer cantilever is connected to the first elastomer body, and the other end is a free end; and
the third elastomer comprises a second elastomer body and at least one second elastomer cantilever, each of the at least one second elastomer cantilever is connected to the second elastomer body and extends along an outer edge of the second elastomer body, and the at least one second elastomer cantilever is 90° rotationally symmetric.
